# EUROPEAN PATENT SPECIFICATION

(11) **EP 0 853 782 B1**
(45) Date of publication and mention of the grant of the patent: **27.06.2001**
(21) Application number: 96933907.6
(22) Date of filing: 04.10.1996
(51) Int. Cl.: G06F 9/318, G06F 9/26, G06F 9/30

(54) **INSTRUCTION DECODER INCLUDING EMULATION USING INDIRECT SPECIFIERS**
BEFEHLSDEKODER MIT EMULATION DURCH INDIREKTSPEZIFIZIERER
DECODEUR D'INSTRUCTIONS AVEC EMULATION UTILISANT DES SPECIFICATEURS INDIRECTS

(30) Priority: 06.10.1995 US 5069 P; 10.10.1995 US 5021 P; 26.01.1996 US 592208; 16.05.1996 US 649980
(43) Date of publication of application: 22.07.1998
(73) Proprietor: Advanced Micro Devices, Inc., Sunnyvale, CA 94088-3453 (US)
(72) Inventor: FAVOR, John, G., San Jose, CA 95124 (US)
(74) Representative: Picker, Madeline Margaret
(86) International application number: US9615421
(87) International publication number: WO9713195

(56) References cited:
- EP-A- 0 651 320
- EP-A- 0 651 322
- GB-A- 2 289 354
- IEEE MICRO, vol. 15, no. 5, 1 October 1995, pages 22-30, XP000527879 SEGARS S ET AL: "EMBEDDED CONTROL PROBLEMS, THUMB, AND THE ARM7TDMI"
- COMPCON '78, February 1978, IEEE, NEW YORK, USA, pages 81-87, XP002021090 JOHN R. MICK: "Microprogramming techniques using the AM2910 sequencer"

## Description

### TECHNICAL FIELD

This invention relates to processors. More specifically, this invention relates to processors having an ipstruction decoder including an emulation ROM for emulation decoder logic.

### BACKGROUND ART

EP-A-0 651 320 discloses a prior art superscalar instruction decoder of the present applicant.

IEEE MICRO, vol. 15, No. 5, 1 October 1995, pages 22 - 30, XP000527879 Segars et al entitled "Embedded control problems, thumb, and the ARN7TDMI" concerns relevant prior art

COMPCON '78, February 1978, IEEE, New York, USA, pages 81-87, XP002021090 John R Mick entitled "Microprogramming techniques using the AM 2910 sequencer" also concerns relevant prior art.

Advanced microprocessors, such as P6-class x86 processors, are defined by a common set of features. These features include a superscalar architecture and performance, decoding of multiple x86 instructions per cycle and conversion of the multiple x86 instructions into RISC-like operations. The RISC-like operations are executed out-of-order in a RISC-type core that is decoupled from decoding. These advanced microprocessors support large instruction windows for reordering instructions and for reordering memory references.

Performance of an advanced superscalar microprocessor is highly dependent upon decoding performance including decoding speed, the number of x86 instructions decoded in a single cycle, and branch prediction performance and handling. Instruction decoders in advanced superscalar microprocessors often include one or more decoding pathways in which x86 instructions are decoded by hardware logic translation and a separate decoding pathway which uses a ROM memory for fetching a RISC operation sequence that corresponds to an x86 instruction. Generally, x86 instructions that are translated by hardware logic are simple x86 instructions. The lookup ROM is used to decode more complex x86 instructions.

A substantial problem in a processor which uses a microcode ROM to direction instruction execution is the size of the ROM memory.

Another problem with usage of a lookup ROM for decoding instructions is the overhead incurred in determining a vector ROM address and retrieving operations (Ops) from ROM. This overhead typically causes a penalty in decoder throughput for instructions that are decoded using the ROM. This throughput penalty lowers decoding performance.

A further problem with the usage of lookup ROM for decoding x86 instructions is the existence of a large number of different CISC-type instructions that are standard for an x86 processor. Since a substantial number of instructions are implemented, a large ROM circuit on the processor chip is necessary for converting the instructions to RISC-like operations. The large number of implemented instructions corresponds to an increased circuit complexity for deriving pointers to the ROM and applying the derived pointers to the ROM. This increased circuit complexity directly relates to an increased overhead that reduces instruction decoding throughput.

A large lookup ROM increases the size of the processor integrated circuit and thereby reduces manufacturing yields of the circuits and increases production costs. One characteristic of a lookup ROM is that many instruction sequences are mutually similar and have only minor differences. Accordingly, a lookup ROM memory typically has a high degree of redundancy between various instructions.

What is needed is a reduced-size and reduced-complexity ROM-based decoder in a superscalar instruction decoder.

### DISCLOSURE OF THE INVENTION

In accordance with the present invention, a ROM-based decoder exploits the high degree of redundancy between instructions to share various operation structures and substantially reduce memory size. The decoder includes a circuit which merges and shares common ROM sequences to reduce ROM size.

In accordance with one aspect of the present invention, a superscalar microprocessor includes an instruction decoder having an emulation code control circuit and an emulation ROM which emulates the function of a logic instruction decoder. An instruction register is loaded with a current instruction and has various bit-fields that are updated according to the state of the processor. An entry point circuit derives an emulation ROM entry point from the instruction stored in the instruction register. The emulation ROM entry point is used to address the emulation ROM, from which an operation (Op) or a group of Ops is read. Various fields in the Op are selectively substituted from the instruction register.

In accordance with a first embodiment of the present invention, an instruction decoder emulation circuit in a processor includes an instruction register for holding an instruction code and an entry point circuit connected to the instruction register to receive an instruction code. The instruction register has a plurality of encoded bit fields within the instruction code. The entry point circuit derives an entry point from the instruction code. The instruction decoder emulation circuit also includes an emulation code sequencer connected to the entry point circuit to receive the derived entry point and an emulation code memory connected to the emulation code sequencer to receive the direction signals. The emulation code sequencer directs a sequence of operations (Ops) and generates direction signals in accordance with the directed sequence. The emulation code memory stores a plurality of Op sequences and sequence control codes. The emulation code memory has a first output terminal for outputting Op sequences and a second output terminal for outputting sequence control codes. The sequence control code output terminal is connected to the emulation code sequencer. The instruction decoder emulation circuit also includes an operation (Op) substitution circuit connected to the emulation code memory first output terminal to receive an Op sequence and connected to the instruction register to receive selected encoded bit fields of the instruction code. The Op substitution circuit substitutes selected fields of the instruction code bit fields into the Op sequence.

The instruction register holds instruction bytes that are decoded by a vectoring decoder. During a vectoring instruction decode, the vectoring decoder generates an initial vectoring quad and an entry point address based on the contents of the instruction register. At the same time, the vectoring decoder initializes the emulation environment variables. also called the emulation environment register, from various information based on fields of the instruction register and based on other information. Information from the emulation environment register is supplied to Op substitution logic that performs the substitution operation.

In accordance with another embodiment of the present invention, a method of operating an instruction decoder emulation circuit in a processor includes the steps of receiving an instruction code into an instruction register having a plurality of encoded bit fields within the instruction code and selectively updating various ones of the plurality of encoded bit fields in accordance with a processor state. The method further includes the steps of deriving an entry point from the instruction code and addressing an emulation code memory according to the derived entry point. The emulation code memory storing a plurality of Op sequences. The method also includes the steps of outputting an addressed operation from the emulation code memory and substituting selected encoded bit fields of the instruction code into the addressed operation.

Many advantages are gained by the described decoder. Usage of emulation mode substitution achieves encoding of CISC functionality while substantially reducing the size of emulation code ROM, advantageously reducing the size and cost of a processor integrated circuit. Emulation mode substitution enables sharing of ROM sequences by instructions which are similar.

### BRIEF DESCRIPTION OF THE DRAWINGS

The features of the invention believed to be novel are specifically set forth in the appended claims. However, the invention itself, both as to its structure and method of operation, may best be understood by referring to the following description and accompanying drawings.

**Figure 1** is a block diagram which illustrates a computer system in accordance with one embodiment of the present invention.

**Figure 2** is a block diagram illustrating one embodiment of processor for usage in the computer system shown in **Figure 1.**

**Figure 3** is a timing diagram which illustrates pipeline timing for an embodiment of the processor shown in **Figure 2.**

**Figure 4** is a schematic block diagram showing an embodiment of an instruction decoder used in the processor shown in **Figure 2.**

**Figure 5** is a schematic block diagram which depicts a structure of an emulation code sequencer and an emulation code memory of the instruction decoder shown in **Figure 4**.

**Figures 6A** through **6E** are pictorial illustrations showing a plurality of operation (Op) formats generated by the instruction decoder shown in **Figure 4.**

**Figure 7** is a pictorial depiction of an OpSeq field format employed in the emulation code memory shown in **Figure 5.**

**Figure 8** is a pictorial depiction of an exemplary instruction substitution.

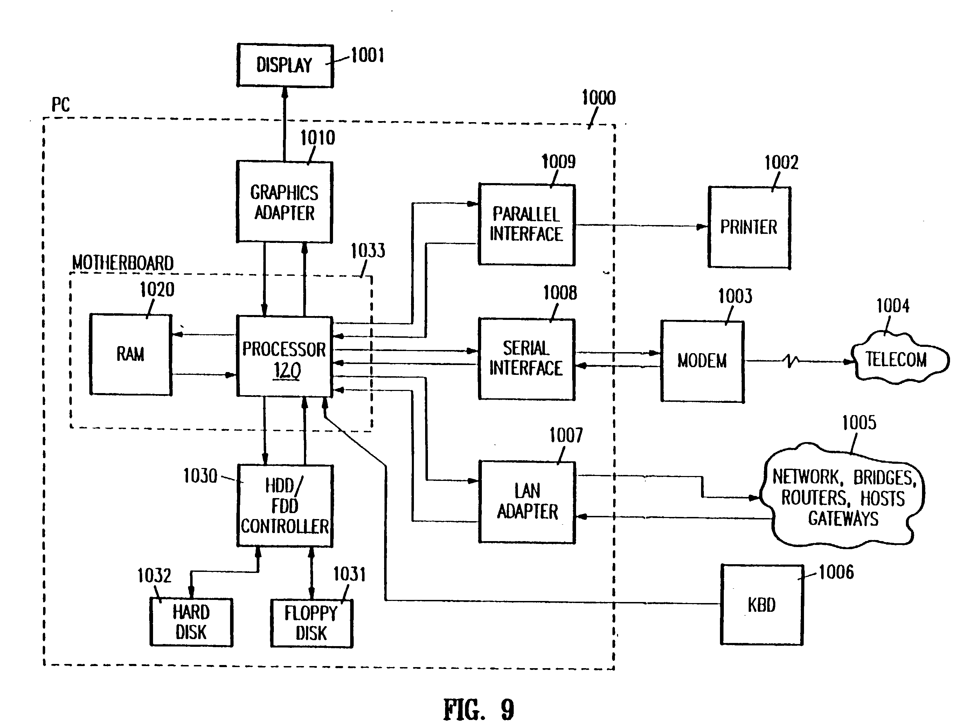

**FIGURE 9** is a block diagram of a personal computer incorporating a processor having an instruction decoder including emulation using indirect specifiers in accordance with an embodiment of the present invention.

### MODE(S) FOR CARRYING OUT THE INVENTION

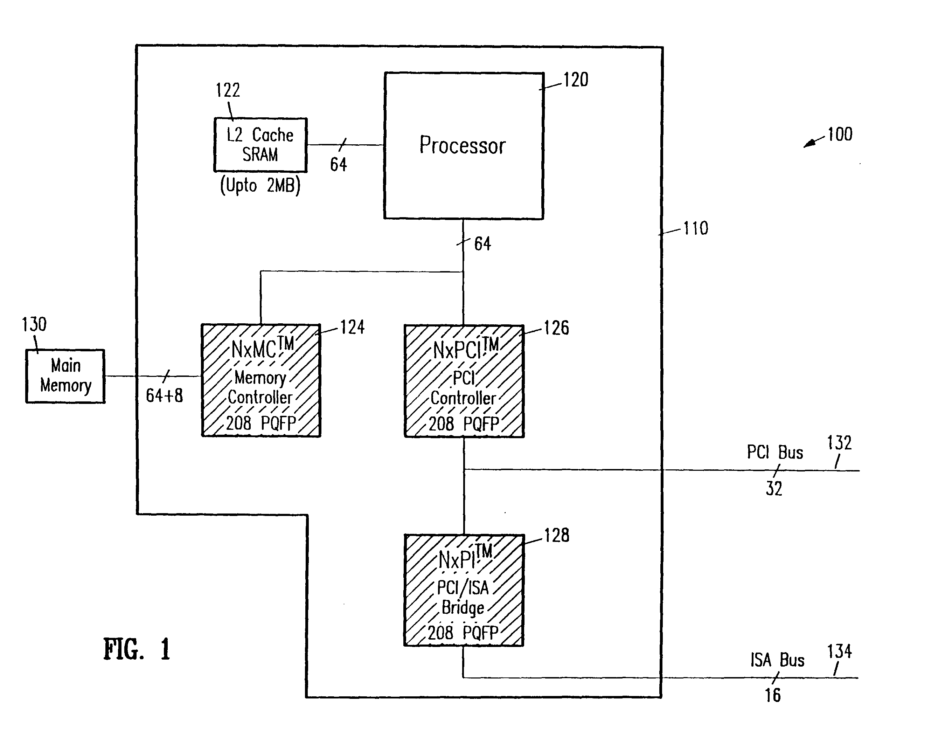

Referring to **Figure 1.** a computer system **100** is used in a variety of applications, including a personal computer application. The computer system **100** includes a computer motherboard **110** containing a processor **120** in accordance with an embodiment of the invention. Processor **120** is a monolithic integrated circuit which executes a complex instruction set so that the processor **120** may be termed a complex instruction set computer (CISC). Examples of complex instruction sets are the x86 instruction sets implemented on the well known 8086 family of microprocessors. The processor **120** is connected to a level 2 (L2) cache **122**, a memory controller **124** and local bus controllers **126** and **128.** The memory controller **124** is connected to a main memory **130** so that the memory controller **124** forms an interface between the processor **120** and the main memory **130**. The local bus controllers **126** and **128** are connected to buses including a PCI bus **132** and an ISA bus **134** so that the local bus controllers **126** and **128** form interfaces between the PCI bus **132** and the ISA bus **134**.

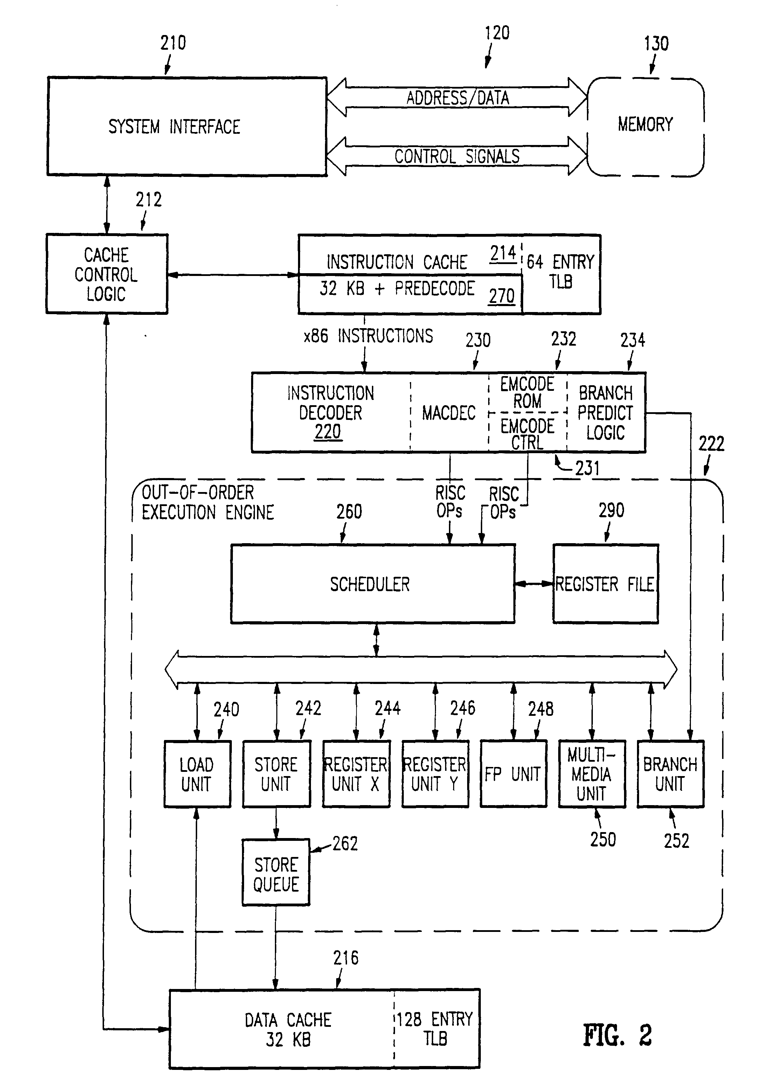

Referring to **Figure 2**, a block diagram of an embodiment of processor **120** is shown. The core of the processor **120** is a RISC superscalar processing engine. Common x86 instructions are converted by instruction decode hardware to operations in an internal RISC86 instruction set. Other x86 instructions, exception processing, and other miscellaneous functionality is implemented as RISC86 operation sequences stored in on-chip ROM. Processor **120** has interfaces including a system interface **210** and an L2 cache control logic **212**. The system interface **210** connects the processor **120** to other blocks of the computer system **100.** The processor **120** accesses the address space of the computer system **100,** including the main memory **130** and devices on local buses **132** and **134** by read and write accesses via the system interface **210.** The L2 cache control logic **212** forms an interface between an external cache, such as the L2 cache **122,** and the processor **120.** Specifically, the L2 cache control logic **212** interfaces the L2 cache **122** and to an instruction cache **214** and a data cache **216** in the processor **120**. The instruction cache **214** and the data cache **216** are level 1 (L1) caches which are connected through the L2 cache **122** to the address space of the computer system **100.**

Instructions from main memory **130** are loaded into instruction cache **214** via a predecoder **270** for anticipated execution. The predecoder **270** generates predecode bits that are stored in combination with instruction bits in the instruction cache **214**. The predecode bits, for example 3 bits, are fetched along with an associated instruction byte (8 bits) and used to facilitate multiple instruction decoding and reduce decode time. Instruction bytes are loaded into instruction cache **214** thirty-two bytes at a time as a burst transfer of four eight-byte quantities. Logic of the predecoder **270** is replicated eight times for usage four times in a cache line so that predecode bits for all eight instruction bytes are calculated simultaneously immediately before being written into the instruction cache **214**. A predecode operation on a byte typically is based on information in one, two or three bytes so that predecode information may extend beyond an eight-byte group. Accordingly, the latter two bytes of an eight-byte group are saved for processing with the next eight-byte group in case of predecode information that overlaps two eight-byte groups. Instructions in instruction cache **214** are CISC instructions. referred to as macroinstructions. An instruction decoder **220** converts CISC instructions from instruction cache **214** into operations of a reduced instruction set computing (RISC) architecture instruction set for execution on an execution engine **222.** A single macroinstruction from instruction cache **214** decodes into one or multiple operations for execution engine **222.**

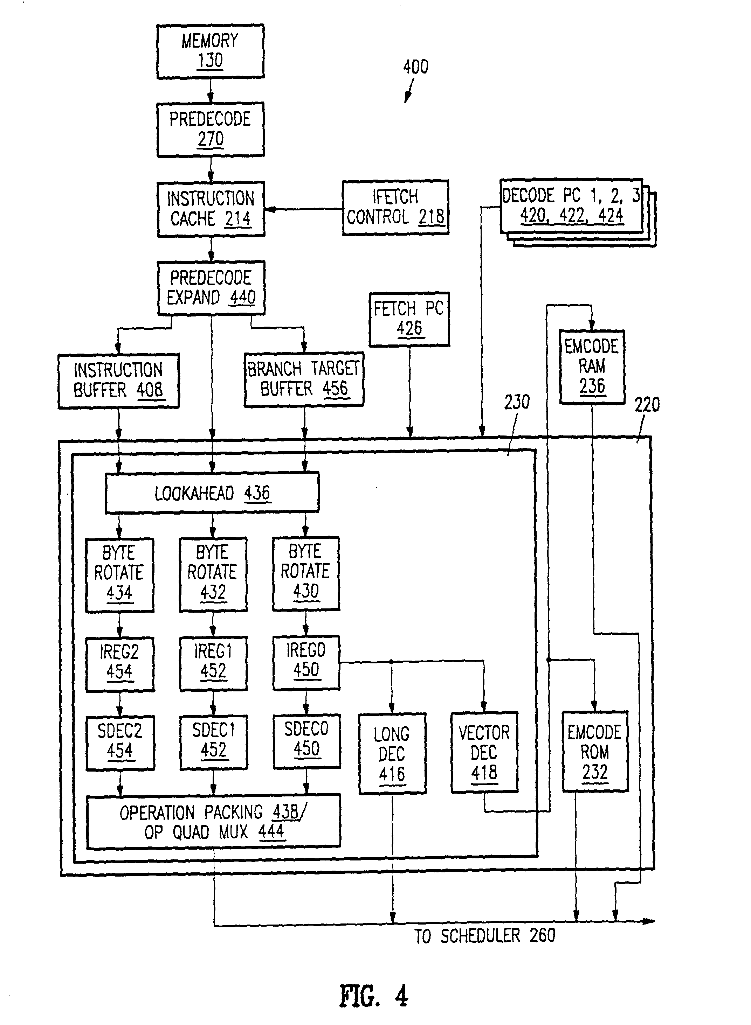

Instruction decoder **220** has interface connections to the instruction cache **214** and an instruction fetch control circuit (shown in **Figure 4**). Instruction decoder **220** includes a macroinstruction decoder **230** for decoding most macroinstructions. an instruction emulation circuit **231** including an emulation ROM **232** for decoding a subset of instructions such as complex instructions, and a branch unit **234** for branch prediction and handling. Macroinstructions are classified according to the general type of operations into which the macroinstructions are converted. The general types of operations are register operations (RegOps), load-store operations (LdStOps), load immediate value operations (LIMMOps), special operations (SpecOps) and floating point operations (FpOps).

Execution engine **222** has a scheduler **260** and six execution units including a load unit **240**, a store unit **242**, a first register unit **244**, a second register unit **246**, a floating point unit **248** and a multimedia unit **250**. The scheduler **260** distributes operations to appropriate execution units and the execution units operate in parallel. Each execution unit executes a particular type of operation. In particular, the load unit **240** and the store unit **242** respectively load (read) data or store (write) data to the data cache **216** (L1 data cache), the L2 cache **122** and the main memory **130** while executing a load/store operation (LdStOp). A store queue **262** temporarily stores data from store unit **242** so that store unit **242** and load unit **240** operate in parallel without conflicting accesses to data cache **216.** Register units **244** and **246** execute register operations (RegOps) for accessing a register file **290**. Floating point unit **248** executes floating point operations (FpOps). Multimedia unit **250** executes arithmetic operations for multimedia applications.

Scheduler **260** is partitioned into a plurality of, for example, 24 entries where each entry contains storage and logic. The 24 entries are grouped into six groups of four entries, called Op quads. Information in the storage of an entry describes an operation for execution, whether or not the execution is pending or completed. The scheduler monitors the entries and dispatches information from the entries to information-designated execution units.

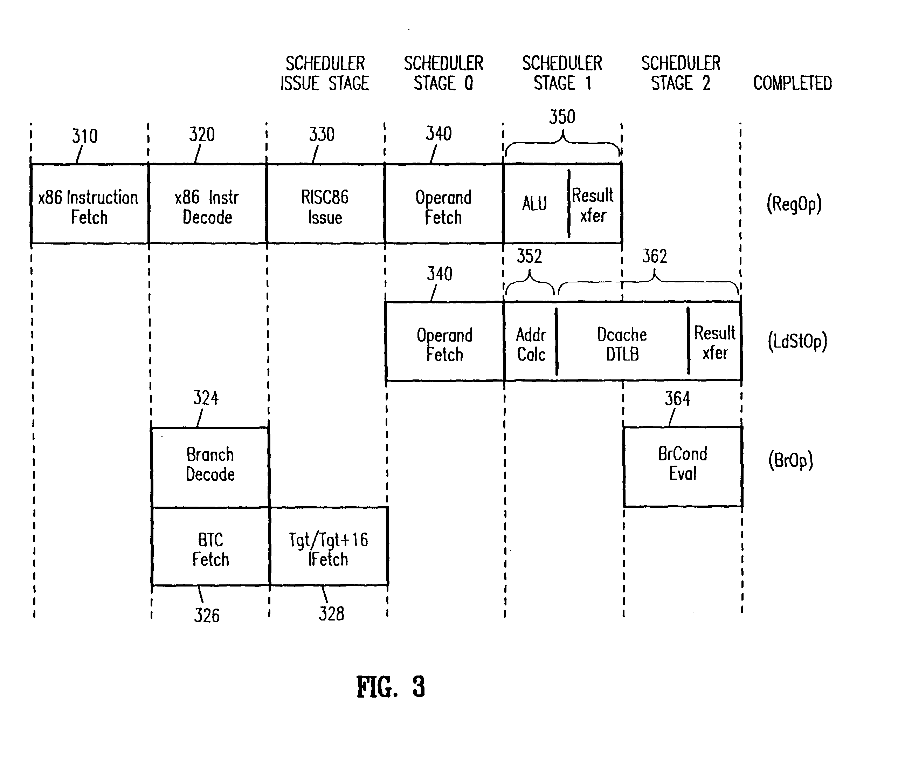

Referring to **Figure 3,** processor **120** employs five and six stage basic pipeline timing. Instruction decoder **220** decodes two instructions in a single clock cycle. During a first stage **310,** the instruction fetch control circuit **218** fetches CISC instructions into instruction cache **214.** Predecoding of the CISC instructions during stage **310** reduces subsequent decode time. During a second stage **320,** instruction decoder **220** decodes instructions from instruction cache **214** and loads an Op quad into scheduler **260.** During a third stage **330,** scheduler **260** scans the entries and issues operations to corresponding execution units **240** to **252** if an operation for the respective types of execution units is available. Operands for the operations issued during stage **330** are forwarded to the execution units in a fourth stage **340.** For a RegOp, the operation generally completes in the next clock cycle which is stage **350,** but LdStOps require more time for address calculation **352,** data access and transfer of the results **362.**

For branch operations, instruction decoder **220** performs a branch prediction **324** during an initial decoding of a branch operation. A branch unit **252** evaluates conditions for the branch at a later stage **364** to determine whether the branch prediction **324** was correct. A two level branch prediction algorithm predicts a direction of conditional branching, and fetching CISC instructions in stage **310** and decoding the CISC instructions in stage **320** continues in the predicted branch direction. Scheduler **260** determines when all condition codes required for branch evaluation are valid, and directs the branch unit **252** to evaluate the branch instruction. If a branch was incorrectly predicted, operations in the scheduler **260** which should not be executed are flushed and decoder **220** begins loading new Op quads from the correct address after the branch. A time penalty is incurred as instructions for the correct branching are fetched. Instruction decoder **220** either reads a previously-stored predicted address or calculates an address using a set of parallel adders. If a previously-predicted address is stored, the predicted address is fetched in stage **326** and instructions located at the predicted address are fetched in stage **328** without a delay for adders. Otherwise, parallel adders calculate the predicted address.

In branch evaluation stage **364,** branch unit **252** determines whether the predicted branch direction is correct. If a predicted branch is correct, the fetching, decoding, and instruction-executing steps continue without interruption. For an incorrect prediction, scheduler **260** is flushed and instruction decoder **220** begins decoding macroinstructions from the correct program counter subsequent to the branch.

Referring to **Figure 4**, a schematic block diagram illustrates an embodiment of an instruction preparation circuit **400** which is connected to the main memory **130**. The instruction preparation circuit **400** includes the instruction cache **214** that is connected to the main memory **130** via the predecoder **270.** The instruction decoder **220** is connected to receive instruction bytes and predecode bits from three alternative sources, the instruction cache **214,** a branch target buffer (BTB) **456** and an instruction buffer **408.** The instruction bytes and predecode bits are supplied to the instruction decoder **220** through a plurality of rotators **430, 432** and **434** via instruction registers **450, 452** and **454**. The macroinstruction decoder **230** has input connections to the instruction cache **214** and instruction fetch control circuit **218** for receiving instruction bytes and associated predecode information. The macroinstruction decoder **230** buffers fetched instruction bytes in an instruction buffer **408** connected to the instruction fetch control circuit **218.** The instruction buffer **408** is a sixteen byte buffer which receives and buffers up to 16 bytes or four aligned words from the instruction cache **214,** loading as much data as allowed by the amount of free space in the instruction buffer **408**. The instruction buffer **408** holds the next instruction bytes to be decoded and continuously reloads with new instruction bytes as old ones are processed by the macroinstruction decoder **230**. Instructions in both the instruction cache **214** and the instruction buffer **408** are held in "extended" bytes, containing both memory bits (8) and predecode bits (5), and are held in the same alignment. The predecode bits assist the macroinstruction decoder **230** to perform multiple instruction decodes within a single clock cycle.

Instruction bytes addressed using a decode program counter (PC) **420, 422,** or **424** are transferred from the instruction buffer **408** to the macroinstruction decoder **230**. The instruction buffer **408** is accessed on a byte basis by decoders in the macroinstruction decoder **230**. However on each decode cycle, the instruction buffer **408** is managed on a word basis for tracking which of the bytes in the instruction buffer **408** are valid and which are to be reloaded with new bytes from the instruction cache **214.** The designation of whether an instruction byte is valid is maintained as the instruction byte is decoded. For an invalid instruction byte, decoder invalidation logic (not shown), which is connected to the macroinstruction decoder **230**, sets a "byte invalid" signal. Control of updating of the current fetch PC **426** is synchronized closely with the validity of instruction bytes in the instruction buffer **408** and the consumption of the instruction bytes by the instruction decoder **220.**

The macroinstruction decoder **230** receives up to sixteen bytes or four aligned words of instruction bytes fetched from the instruction fetch control circuit **218** at the end of a fetch cycle. Instruction bytes from the instruction cache **214** are loaded into a 16-byte instruction buffer **408**. The instruction buffer **408** buffers instruction bytes, plus predecode information associated with each of the instruction bytes, as the instruction bytes are fetched and/or decoded. The instruction buffer **408** receives as many instruction bytes as can be accommodated by the instruction buffer **408** free space, holds the next instruction bytes to be decoded and continually reloads with new instruction bytes as previous instruction bytes are transferred to individual decoders within the macroinstruction decoder **230**. The instruction predecoder **270** adds predecode information bits to the instruction bytes as the instruction bytes are transferred to the instruction cache **214.** Therefore, the instruction bytes stored and transferred by the instruction cache **214** are called extended bytes. Each extended byte includes eight memory bits plus five predecode bits. The five predecode bits include three bits that encode instruction length, one D-bit that designates whether the instruction length is D-bit dependent, and a HasModRM bit that indicates whether an instruction code includes a modrm field. The thirteen bits are stored in the instruction buffer **408** and passed on to the macroinstruction decoder **230** decoders. The instruction buffer **408** expands each set of five predecode bits into six predecode bits. Predecode bits enable the decoders to quickly perform multiple instruction decodes within one clock cycle.

The instruction buffer **408** receives instruction bytes from the instruction cache **214** in the memory-aligned word basis of instruction cache **214** storage so that instructions are loaded and replaced with word granularity. Thus, the instruction buffer **408** byte location 0 always holds bytes that are addressed in memory at an address of 0 (mod 16).

Instruction bytes are transferred from the instruction buffer **408** to the macroinstruction decoder **230** with byte granularity. During each decode cycle, the sixteen extended instruction bytes within the instruction buffer **408** , including associated implicit word valid bits. are transferred to the plurality of decoders within the macroinstruction decoder **230**. This method of transferring instruction bytes from the instruction cache **214** to the macroinstruction decoder **230** via the instruction buffer **408** is repeated with each decode cycle as long as instructions are sequentially decoded. When a control transfer occurs, for example due to a taken branch operation, the instruction buffer **408** is flushed and the method is restarted.

The current decode PC has an arbitrary byte alignment in that the instruction buffer **408** has a capacity of sixteen bytes but is managed on a four-byte word basis in which all four bytes of a word are consumed before removal and replacement or the word with four new bytes in the instruction buffer **408.** An instruction has a length of one to eleven bytes and multiple bytes are decoded so that the alignment of an instruction in the instruction buffer **408** is arbitrary. As instruction bytes are transferred from the instruction buffer **408** to the macroinstruction decoder **230,** the instruction buffer **408** is reloaded from the instruction cache **214**.

Instruction bytes are stored in the instruction buffer **408** with memory alignment rather than a sequential byte alignment that is suitable for application of consecutive instruction bytes to the macroinstruction decoder **230.** Therefore. a set of byte rotators **430. 432** and **434** are interposed between the instruction buffer **408** and each of the decoders of the macroinstruction decoder **230.** Four instruction decoders, including three short decoders SDec0 **410,** SDec1 **412** or SDec2 **414,** and one combined long and vectoring decoder **418,** share the byte rotators **430, 432** and **434.** In particular, the short decoder SDec0 **410** and the combined long and vectoring decoder **418** share byte rotator **430.** Short decoder SDecl **412** is associated with byte rotator **432** and short decoder SDec2 **414** is associated with byte rotator **434.**

A plurality of pipeline registers, specifically instruction registers **450, 452** and **454,** are interposed between the byte rotators **430, 432** and **434** and the instruction decoder **220** to temporarily hold the instruction bytes, predecode bits and other information, thereby shortening the decode timing cycle. The other information held in the instruction registers **450, 452** and **454** includes various information for assisting instruction decoding, including prefix (e.g. OF) status, immediate size (8-bit or 32-bit), displacementand long decodable length designations.

Although a circuit is shown utilizing three rotators and three short decoders, in other embodiments, different numbers of circuit elements may be employed. For example, one circuit includes two rotators and two short decoders.

Instructions are stored in memory alignment, not instruction alignment, in the instruction cache **214,** the branch target buffer (BTB) **456** and the instruction buffer **408** so that the location of the first instruction byte is not known. The byte rotators **430, 432** and **434** find the first byte of an instruction.

The macroinstruction decoder **230** also performs various instruction decode and exception decode operations, including validation of decode operations and selection between different types of decode operations. Functions performed during decode operations include prefix byte handling, support for vectoring to the emulation code ROM **232** for emulation of instructions, and for branch unit **234** operations, branch unit interfacing and return address prediction. Based on the instruction bytes and associated information, the macroinstruction decoder **230** generates operation information in groups of four operations corresponding to Op quads. The macroinstruction decoder **230** also generates instruction vectoring control information and emulation code control information. The macroinstruction decoder **230** also has output connections to the scheduler **260** and to the emulation ROM **232** for outputting the Op quad information, instruction vectoring control information and emulation code control information. The macroinstruction decoder **230** does not decode instructions when the scheduler **260** is unable to accept Op quads or is accepting Op quads from emulation code ROM **232.**

The macroinstruction decoder **230** has five distinct and separate decoders, including three "short" decoders SDec0 **410,** SDec1 **412** and SDec2 **414** that function in combination to decode up to three "short" decode operations of instructions that are defined within a subset of simple instructions of the x86 instruction set. Generally, a simple instruction is an instruction that translates to fewer than three operations. The short decoders SDec0 **410,** SDecl **412** and SDec2 **414** each typically generate one or two operations, although zero operations are generated in certain cases such as prefix decodes. Accordingly for three short decode operations, from two to six operations are generated in one decode cycle. The two to six operations from the three short decoders are subsequently packed together by operation packing logic **438** into an Op quad since a maximum of four of the six operations are valid. Specifically, the three short decoders SDec0 **410,** SDec1 **412** and SDec2 **414** each attempt to decode two operations, potentially generating six operations. Only four operations may be produced at one time so that if more than four operations are produced, the operations from the short decoder SDec2 **414** are invalidated. The five decoders also include a single "long" decoder **416** and a single "vectoring" decoder **418**. The long decoder **416** decodes instructions or forms of instructions having a more complex address mode form so that more than two operations are generated and short decode handling is not available. The vectoring decoder **418** handles instructions that cannot be handled by operation of the short decoders SDec0 **410,** SDec1 **412** and SDec2 **414** or by the long decoder **416.** The vectoring decoder **418** does not actually decode an instruction, but rather vectors to a location of emulation ROM **232** for emulation of the instruction. Various exception conditions that are detected by the macroinstruction decoder **230** are also handled as a special form of vectoring decode operation. When activated, the long decoder **416** and the vectoring decoder **418** each generates a full Op quad. An Op quad generated by short decoders SDec0 **410,** SDec1 **412** and SDec2 **414** has the same format as an Op quad generated by the long and vectoring decoders **416** and **418.** The short decoder and long decoder Op quads do not include an OpSeq field. The macroinstruction decoder **230** selects either the Op quad generated by the short decoders **410, 412** and **414** or the Op quad generated by the long decoder **416** or vectoring decoder **418** as an Op quad result of the macroinstruction decoder **230** are each decode cycle. Short decoder operation, long decoder operation and vectoring decoder operation function in parallel and independently of one another, although the results of only one decoder are used at one time.

Each of the short decoders **410, 412** and **414** decodes up to seven instruction bytes, assuming the first byte to be an operation code (opcode) byte and the instruction to be a short decode instruction. Two operations (Ops) are generated with corresponding valid bits. Appropriate values for effective address size, effective data size, the current x86-standard B-bit, and any override operand segment register are supplied for the generation of operations dependent on these parameters. The logical address of the next "sequential" instruction to be decoded is supplied for use in generating the operations for a CALL instruction. Note that the word sequential is placed in quotation marks to indicate that, although the "sequential" address generally points to an instruction which immediately precedes the present instruction, the "sequential" address may be set to any addressed location. The current branch prediction is supplied for use in generating the operations for conditional transfer control instructions. A short decode generates control signals including indications of a transfer control instruction (for example, Jcc, LOOP, JMP, CALL), an unconditional transfer control instruction (for example, JMP, CALL), a CALL instruction, a prefix byte, a cc-dependent RegOp, and a designation of whether the instruction length is address or data size dependent. Typically one or both operations are valid, but prefix byte and JMP decodes do not generate a valid op. Invalid operations appear as valid NOOP operations to pad an Op quad.

The first short decoder **410** generates operations based on more than decoding of the instruction bytes. The first short decoder **410** also determines the presence of any prefix bytes decoded during preceding decode cycles. Various prefix bytes include 0F. address size override, operand size override, six segment override bytes, REP/REPE, REPNE and LOCK bytes. Each prefix byte affects a subsequent instruction decode in a defined way. A count of prefix bytes and a count of consecutive prefix bytes are accumulated during decoding and furnished to the first short decoder SDec0 **410** and the long decoder **416.** The consecutive prefix byte count is used to check whether an instruction being decoded is too long. Prefix byte count information is also used to control subsequent decode cycles, including checking for certain types of instruction-specific exception conditions. Prefix counts are reset or initialized at the end of each successful non-prefix decode cycle in preparation for decoding the prefix and opcode bytes of a next instruction. Prefix counts are also reinitialized when the macroinstruction decoder **230** decodes branch condition and write instruction pointer (WRIP) operations.

Prefix bytes are processed by the first short decoder **410** in the manner of one-byte short decode instructions. At most, one prefix byte is decoded in a decode cycle, a condition that is enforced through invalidation of all short decodes following the decode of a prefix byte. Effective address size, data size, operand segment register values, and the current B-bit, are supplied to the first short decoder **410** but can decode along with preceding opcodes.

The address size prefix affects a decode of a subsequent instruction both for decoding of instructions for which the generated operation depends on effective address size and for decoding of the address mode and instruction length of modr/m instructions. The default address size is specified by a currently-specified D-bit, which is effectively toggled by the occurrence of one or more address size prefixes.

The operand size prefix also affects the decode of a subsequent instruction both for decoding of instructions for which the generated operation depends on effective data size and for decoding of the instruction length. The default operand size is specified by a currently-specified x86-standard D-bit, which is effectively toggled by the occurrence of one or more operand size prefixes.

The segment override prefixes affect the decode of a subsequent instruction only in a case when the generation of a load-store operation (LdStOps) is dependent on the effective operand segment of the instruction. The default segment is DS or SS, depending on the associated general address mode, and is replaced by the segment specified by the last segment override prefix.

The REP/REPE and REPNE prefixes do not affect the decode of a subsequent instruction. If the instruction is decoded by the macroinstruction decoder **230**, rather than the emulation code ROM **232**, then any preceding REP prefixes are ignored. However, if the instruction is vectored. then the generation of the vector address is modified in some cases. Specifically, if a string instruction or particular neighboring opcode is vectored, then an indication of the occurrence of one or more of the REP prefixes and designation of the last REP prefix encountered are included in the vector address. For all other instructions the vector address is not modified and the REP prefix is ignored.

A LOCK prefix inhibits all short and long decoding except the decoding of prefix bytes, forcing the subsequent instruction to be vectored. When the vector decode cycle of this subsequent instruction occurs, so long as the subsequent instruction is not a prefix, the opcode byte is checked to ensure that the instruction is within a "lockable" subset of the instructions. If the instruction is not a lockable instruction, an exception condition is recognized and the vector address generated by the vectoring decoder **418** is replaced by an exception entry point address.

Instructions decoded by the second and third short decoders **412** and **414** do not have prefix bytes so that decoders **412** and **414** assume fixed default values for address size, data size, and operand segment register values.

Typically, the three short decoders generate four or fewer operations because three consecutive short decodes are not always performed and instructions often short decode into only a single operation. However, for the rare occurrence when more than four valid operations are generated, operation packing logic **438** inhibits or invalidates the third short decoder **414** so that only two instructions are successfully decoded and at most four operations are generated for packing into an Op quad.

When the first short decoder **410** is unsuccessful, the action of the second and third short decoders **412** and **414** are invalidated. When the second short decoder **412** is unsuccessful, the action of the third short decoder **414** is invalidated. When even the first short decode is invalid, the decode cycle becomes a long or vectoring decode cycle. In general, the macroinstruction decoder **230** attempts one or more short decodes and, if such short decodes are unsuccessful, attempts one long decode. If the long decode is unsuccessful. the macroinstruction decoder **230** performs a vectoring decode. Multiple conditions cause the short decoders **410, 412** and **414** to be invalidated. Most generally, short decodes are invalidated when the instruction operation code (opcode) or the designated address mode of a modr/m instruction does not fall within a defined short decode or "simple" subset of instructions. This condition typically restricts short decode instructions to those operations that generate two or fewer operations. Short decodes are also invalidated when not all of the bytes in the instruction buffer **408** for a decoded instruction are valid. Also, "cc-dependent" operations, operations that are dependent on status flags, are only generated by the first short decoder **410** to ensure that these operations are not preceded by and ".cc" RegOps. A short decode is invalidated for a second of two consecutive short decodes when the immediately preceding short decode was a decode of a transfer control instruction, regardless of the direction taken. A short decode is invalidated for a second of two consecutive short decodes when the first short decode was a decode of a prefix byte. In general, a prefix code or a transfer control code inhibits further decodes in a cycle.

Furthermore, no more than sixteen instruction bytes are consumed by the macroinstruction decoder **230** since the instruction buffer **408** only holds sixteen bytes at one time. Also, at most four operations can be packed into an Op quad. These constraints only affect the third short decoder **414** since the length of each short decoded instruction is at most seven bytes and operations in excess of four only arise in the third short decoder **414**.

In a related constraint, if the current D-bit value specifies a 16-bit address and data size default, then an instruction having a length that is address and/or data dependent can only be handled by the first short decoder **410** since the predecode information is probably incorrect. Also, when multiple instruction decoding is disabled, only the first short decoder **410** is allowed to successfully decode instructions and prefix bytes.

Validation tests are controlled by short decoder validation logic in the macroinstruction decoder **230** and are independent of the operation of short decoders **410, 412** and **414.** However, each of the short decoders **410, 412** and **414** does set zero, one or two valid bits depending on the number of operations decoded. These valid bits, a total of six for the three short decoders **410, 412** and **414,** are used by the operation packing logic **438** to determine which operations to pack into an Op quad and to force invalid operations to appear as NOOP (no operation) operations. The operation packing logic **438** operates without short decoder validation information since valid short decodes and associated operations are preceded only by other valid short decodes and associated operations.

The short decoders **410, 412** and **414** also generate a plurality of signals representing various special opcode or modr/m address mode decodes. These signals indicate whether a certain form of instruction is currently being decoded by the instruction decoder **220**. These signals are used by short decode validation logic to handle short decode validation situations.

The instruction bytes, which are stored unaligned in the instruction buffer **408,** are aligned by byte rotators **430, 432** and **434** as the instruction bytes are transferred to the decoders **410-418.** The first short decoder SDec0 410, the long decoder 416 and the vectoring decoder 418 share a first byte rotator 430. The second and third short decoders SDec1 **412** and SDec2 **414** use respective second and third byte rotators **432** and **434.** During each decode cycle, the three short decoders SDec0 **410.** SDecl **412** and SDec2 **414** attempt to decode what are, most efficiently, three short decode operations using three independently-operating and parallel byte rotators **430. 432** and **434.** Although the multiplexing by the byte rotators **430, 432** and **434** of appropriate bytes in the instruction buffer **408** to each respective decoder SDec0 **410,** SDec1 **412** and SDec2 **414** is conceptually dependent on the preceding instruction decode operation, instruction length lookahead logic **436** uses the predecode bits to enable the decoders to operate substantially in parallel.

The long and vectoring decoders **416** and **418,** in combination, perform two parallel decodes of eleven instruction bytes, taking the first byte to be an opcode byte and generating either a long instruction decode Op quad or a vectoring decode Op quad. Information analyzed by the long and vectoring decoders **416** and **418** includes effective address size, effective data size, the current B-bit and DF-bit, any override operand segment register, and logical addresses of the next sequential and target instructions to be decoded. The long and vectoring decoders **416** and **418** generate decode signals including an instruction length excluding preceding prefix bits, a designation of whether the instruction is within the long decode subset of instructions, a RET instruction, and an effective operand segment register, based on a default implied by the modr/m address mode plus any segment override.

During a decode cycle in which none of the short decoders SDec0 **410,** SDec1 **412** and SDec2 **414** successfully decodes a short instruction, the macroinstruction decoder **230** attempts to perform a long decode using the long decoder **416.** If a long decode cannot be performed, a vectoring decode is performed. In some embodiments, the long and vectoring decoders **416** and **418** are conceptually separate and independent decoders, just as the long and vectoring decoders **416** and **418** are separate and independent of the short decoders **410, 412** and **414.** Physically, however, the long and vectoring decoders **416** and **418** share much logic and generate similar Op quad outputs. Instructions decoded by the long decoder **416** are generally included within the short decode subset of instructions except for an address mode constraint such as that the instruction cannot be decoded by a short decoder because the instruction length is greater than seven bytes or because the address has a large displacement that would require generation of a third operation to handle to displacement. The long decoder **416** also decodes certain additional modr/m instructions that are not in the short decode subset but are sufficiently common to warrant hardware decoding. Instruction bytes for usage or decoding by the long decoder **416** are supplied from the instruction buffer **408** by the first byte rotator **430,** the same instruction multiplexer that supplies instruction bytes to the first short decoder SDec0 **410.** However, while the first short decoder SDec0 **410** receives only seven bytes, the long decoder **416** receives up to eleven consecutive instruction bytes, corresponding to the maximum length of a modr/m instruction excluding prefix bytes. Thus, the first byte rotator **430** is eleven bytes wide although only the first seven bytes are connected to the first short decoder SDec0 **410.** The long decoder **416** only decodes one instruction at a time so that associated predecode information within the instruction buffer **408** is not used and is typically invalid.

The first byte of the first byte rotator **430** is fully decoded as an opcode byte and, in the case of a modr/m instruction, the second instruction byte and possibly the third are fully decoded as modr/m and sib bytes, respectively. The existence of a 0F prefix is considered in decoding of the opcode byte. The 0F prefix byte inhibits all short decoding since all short decode instructions are non-0F or "one-byte" opcodes. Because all prefix bytes are located within the "one-byte" opcode space, decoding of a 0F prefix forces the next decode cycle to be a two-byte opcode instruction, such as a long or vectoring decode instruction. In addition to generating operations based on the decoding of modr/m and sib bytes, the first byte rotator **430** also determines the length of the instruction for usage by various program counters. whether the instruction is a modr/m instruction for inhibiting or invalidating the long decoder, and whether the instruction is an instruction within the long decode subset of operation codes (opcodes). The long decoder **416** always generates four operations and, like the short decoders **410, 412** and **141,** presents the operations in the form of an emulation code-like Op quad, excluding an OpSeq field. The long decoder **416** handles only relatively simple modr/m instructions. A long decode Op quad has two possible forms that differ only in whether the third operation is a load operation (LdOp) or a store operation (StOp) and whether the fourth operation is a RegOp or a NOOP. A first long decode Op quad has the form:

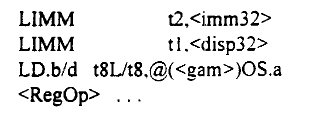

A second long decode Op quad has the form:

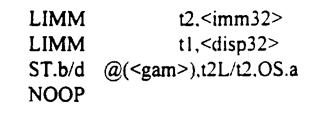

The @(<gam>) address mode specification represents an address calculation corresponding to that specified by the modr/m and/or sib bytes of the instruction, for example @(AX + BX∗4 + LD). The <imm32> and <disp32> values are four byte values containing the immediate and displacement instruction bytes when the decoded instruction contains such values.

The long decoder **416,** like the first short decoder **410,** generates operations taking into account the presence of any prefix bytes decoded by the short decoders during preceding decode cycles. Effective address size, data size, operand segment register values, and the current B-bit are supplied to the long decoder **416** and are used to generate operations. No indirect size or segment register specifiers are included within the final operations generated by the long decoder **416.**

Only a few conditions inhibit or invalidate an otherwise successful long decode. One such condition is an instruction operation code (opcode) that is not included in the long decode subset of instructions. A second condition is that not all of the instruction buffer 408 bytes for the decoded instruction are valid.

The vectoring decoder **418** handles instructions that are not decoded by either the short decoders or the long decoder **416.** Vectoring decodes are a default case when no short or long decoding is possible and sufficient valid bytes are available. Typically, the instructions handled by the vectoring decoder **418** are not included in the short decode or long decode subsets but also result from other conditions such as decoding being disabled or the detection of an exception condition. During normal operation, only non-short and non-long instructions are vectored. However, all instructions may be vectored. Undefined opcodes are always vectored. Only prefix bytes are always decoded. Prefix bytes are always decoded by the short decoders **410, 412** and **414.**

When an exception condition is detected during a decode cycle, a vectoring decode is forced, generally overriding any other form of decode without regard for instruction byte validity of the decoded instruction. When a detected exception condition forces a vectoring decode cycle, the generated Op quad is undefined and the Op quad valid bit for presentation to the scheduler **260** is forced to zero. The Op quad valid bit informs the scheduler **260** that no operations are to be loaded to the scheduler **260.** As a result, no Op quad is loaded into the scheduler **260** during an exception vectoring decode cycle.

Few conditions inhibit or invalidate a vectoring decode. One such condition is that not all of the bytes in the instruction buffer **408** are valid.

When an instruction is vectored, control is transferred to an emulation code entry point. An emulation code entry point is either in internal emulation code ROM **232** or in external emulation code RAM **236**. The emulation code starting from the entry point address either emulates an instruction or initiates appropriate exception processing.

A vectoring decode cycle is properly considered a macroinstruction decoder **230** decode cycle. In the case of a vectoring decode, the macroinstruction decoder **230** generate the vectoring quad and generate the emulation code address into the emulation code ROM **232**. Following the initial vectoring decode cycle, the macroinstruction decoder **230** remains inactive while instructions are generated by the emulation code ROM **232** or emulation code RAM **236** until a return from emulation (ERET) OpSeq is encountered. The return from emulation (ERET) sequencing action transitions back to macroinstruction decoder **230** decoding. During the decode cycles following the initial vectoring decode cycle, the macroinstruction decoder **230** remains inactive, continually attempting to decode the next "sequential" instruction but having decode cycles repeatedly invalidated until after the ERET is encountered, thus waiting by default to decode the next "sequential" instruction.

Instruction bytes for usage or decoding by the vectoring decoder **418** are supplied from the instruction buffer **408** by the first byte rotator **430,** the same instruction multiplexer that supplies instruction bytes to the first short decoder SDec0 **410** and to the long decoder **416.** The vectoring decoder **418** receives up to eleven consecutive instruction bytes, corresponding to the maximum length of a modr/m instruction excluding prefix bytes. Thus, the full eleven byte width of the first byte rotator **430** is distributed to both the long decoder **416** and the vectoring decoder **418**. The predecode information within the instruction buffer **408** is not used by the vectoring decoder **418.**

As in the case of the long decoder **416**, the first byte of the first byte rotator **430** is fully decoded as an opcode byte and, in the case of a modr/m instruction, the second instruction byte and possibly the third are fully decoded as modr/m and sib bytes, respectively. The vectoring decoder **418** generates operations taking into account the presence of any prefix bytes decoded by the short decoders during preceding decode cycles. The existence of a 0F prefix is considered in decoding of the opcode byte. In addition to generating operations based on the decoding of modr/m and sib bytes, the first byte rotator **430** also determines the length of the instruction for usage by various program counters. whether the instruction is a modr/m instruction for inhibiting or invalidating the long decoder, and whether the instruction is an instruction within the long decode subset of operation codes (opcodes). If not, a vectoring decode is initiated. Effective address size, data size and operand segment register values are supplied to the vectoring decoder **418** and are used to generate operations. No indirect size or segment register specifiers are included within the final operations generated by the vectoring decoder **418**.

During a vectoring decode cycle, the vectoring decoder **418** generates a vectoring Op quad, generates an emulation code entry point or vector address, and initializes an emulation environment. The vectoring Op quad is specified to pass various information to initialize emulation environment scratch registers.

The value of the emulation code entry point or vector address is based on a decode of the first and second instruction bytes, for example the opcode and modr/m bytes, plus other information such as the presence of an 0F prefix, a REP prefix or the like. In the case of vectoring caused by an exception condition, the entry point or vector address is based on a simple encoded exception identifier.

The emulation environment is stored for resolving environment dependencies. All of the short decoders **410, 412** and **414** and long decoder **416** directly resolve environmental dependencies, such as dependencies upon effective address and data sizes, as operations are generated so that these operations never contain indirect size or register specifiers. However, emulation code operations do refer to such effective address and data size values for a particular instance of the instruction being emulated. The emulation environment is used to store this additional information relating to the particular instruction that is vectored. This information includes general register numbers, effective address and data sizes, an effective operand segment register number, the prefix byte count, and a record of the existence of a LOCK prefix. The emulation environment also loads a modr/m reg field and a modr/m regm field are loaded into Reg and Regm registers. The emulation environment is initialized at the end of a successful vectoring decode cycle and remains at the initial state for substantially the duration of the emulation of an instruction by emulation code, until an ERET code is encountered.

The vectoring decoder **418** generates four operations of an Op quad in one of four forms. All four forms include three LIMM operations. The four forms differ only in the immediate values of the LIMM operations and in whether the third operation is an LEA operation or a NOOP operation.

A first vectoring decode Op quad has the form:

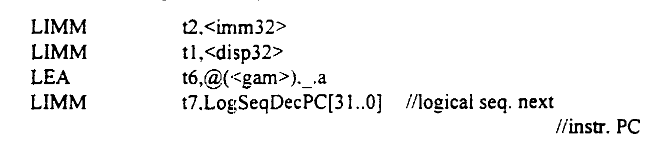

A second vectoring decode Op quad has the form:

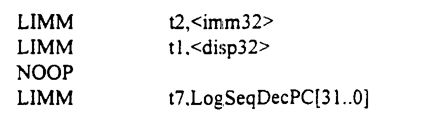

A third vectoring decode Op quad has the form:

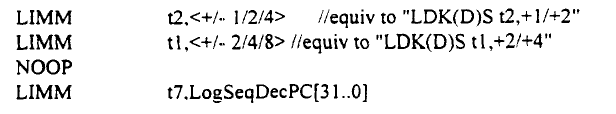

A fourth vectoring decode Op quad has the form:

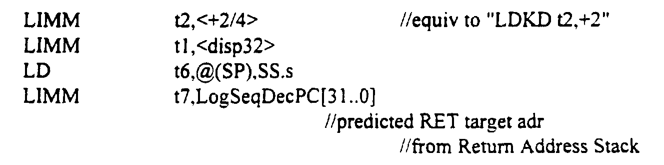

The first two forms of vectoring Op quads apply for most opcodes. The first form is used for memory-referencing modr/m instructions for which the LEA operation is used to compute and load a general address mode effective operand address into a treg. The second form is used for non-modr/m and register-referencing modr/m instructions. For instructions having the second form no address is necessarily computed, although the <imm32> and <disp32> values remain useful insofar as they contain instruction bytes following the opcode byte. The third form of vectoring Op quad is used for all string instructions plus some neighboring non-modr/m instructions. A fourth form of vectoring Op quad supports special vectoring and emulation requirements for near RET instructions.

The macroinstruction decoder **230** has four program counters, including three decode program counters **420, 422** and **424,** and one fetch program counter **426.** A first decode program counter, called an instruction PC **420,** is the logical address of the first byte, including any prefix bytes, of either the current instruction being decoded or, if no instruction is currently decoding, the next instruction to be decoded. If the decode operation is a multiple instruction decode, instruction PC **420** points to the first instruction of the multiple instructions to be decoded. The instruction PC **420** corresponds to the architectural address of an instruction and is used to generate instruction fault program counters for handling of exceptions. The instruction PC **420** is passed down the scheduler **260** with corresponding Op quads and is used by an operation commit unit (OCU) (not shown) of the scheduler **260** to produce instruction fault program counters to be saved during exception processing. When an Op quad is generated by the macroinstruction decoder **230,** the current instruction PC **420** value is tagged to the Op quad and loaded into the Scheduler **260** Op quad entry alone with the Op quad. A second decode program counter, called a logical decode PC **422,** is the logical address of the next instruction byte to be decoded and addresses either an opcode byte or a prefix byte. A third decode program counter, called a linear decode PC **424,** is the linear address of the next instruction byte to be decoded and addresses either an opcode byte or a prefix byte. The logical decode PC **422** and the linear decode PC **424** point to the same instruction byte. The linear decode PC **424** designates the address of the instruction byte currently at the first byte rotator **430**.

The various decoders in the macroinstruction decoder **230** function on the basis of decoding or consuming either prefix bytes or whole instructions minus any prefix bytes so that prefixes are generally handled as one-byte instructions. Therefore, the address boundaries between instruction and prefix byte decodes are more important than instruction boundaries alone. Consequently, at the beginning of each decode cycle, the next instruction byte to be decoded is not necessarily the true beginning of an instruction.

At the beginning of a decode cycle the logical decode PC **422** and the linear decode PC **424** contain the logical and linear addresses of the next instruction to be decoded, either an instruction or a prefix byte. The linear decode PC **424** is a primary program counter value that is used during the decoding process to access the instruction buffer **408**. The linear decode PC **424** represents the starting point for the decode of a cycle and specifically controls the byte rotator feeding bytes from the instruction buffer **408** to the first short decoder **410** and to the long and vectoring decoders **416** and **418.** The linear decode PC **424** also is the reference point for determining the instruction addresses of any further short decode instructions or prefix bytes, thus generating control signals for the byte rotators feeding the second and third short decoders **412** and **414.**

The linear decode PC **424** also acts secondarily to check for breakpoint matches during the first decode cycles of new instructions, before prefix bytes are decoded, and to check for code segment overruns by the macroinstruction decoder **230** during successful instruction decode cycles.

The logical decode PC **422** is used for program counter-related transfer control instructions, including CALL instructions. The logical decode PC **422** is supplied to the branch unit **234** to be summed with the displacement value of a PC-relative transfer control instruction to calculate a branch target address. The logical decode PC **422** also supports emulation code emulation of instructions. The next sequential logical decode program counter (PC) **422** is available in emulation code from storage in a temporary register by the vectoring Op quad for general usage. For example, the next sequential logical decode PC **422** is used to supply a return address that a CALL instruction pushes on a stack.

A next logical decode PC **428** is set to the next sequential logical decode program counter value and has functional utility beyond that of the logical decode PC **422**. The next logical decode PC **428** directly furnishes the return address for CALL instructions decoded by the macroinstruction decoder **230**. The next logical decode PC **428** also is passed to emulation code logic during vectoring decode cycles via one of the operations within the vectoring Op quad.

During a decode cycle. the linear decode PC **424** points to the next instruction bytes to be decoded. The four least significant bits of linear decode PC **424** point to the first instruction byte within the instruction buffer **408** and thereby directly indicate the amount of byte rotation necessary to align the first and subsequent instruction bytes in the instruction cache **214.** The first byte rotator **430** is an instruction multiplexer, specifically a 16:1 byte multiplexer, for accessing bytes in the instruction buffer **408** that are offset by the linear decode PC **424** amount. The first byte rotator **430** is seven bytes wide for the first short decoder SDec0 **410** and eleven bytes wide for the long decoder **416** and the vectoring decoder **418** in combination. Shared logic in the first short decoder SDec0 **410,** the long decoder **416** and the vectoring decoder **418** generate a first instruction length value ILen0 for the first instruction. The second and third byte rotators **432** and **434** are seven byte-wide instruction multiplexers, specifically 16:1 byte multiplexers. The second byte rotator **432** accesses bytes in the instruction buffer **408** that are offset by the sum of the linear decode PC **424** amount and the first instruction length ILen0. Logic in the second short decoder SDec0 **412** generate a second instruction length value ILen I for the second instruction. The third byte rotator **434** accesses bytes in the instruction buffer **408** that are offset by the sum of the linear decode PC **424** amount and the first and second instruction lengths ILen0 and ILen1. The byte rotators **430, 432** and **434** multiplex instruction bytes but not predecode bits. The byte rotators **430, 432** and **434** are controlled using predecode information in which the predecode bits associated with the first opcode byte or the first byte of the first instruction directly controls the second rotator **432**. The first byte of the second instruction directly controls the third rotator **434**. Each predecode code implies an instruction length but what is applied to the next rotator is a pointer. The pointer is derived by taking the four least significant bits of the program counter at the present instruction plus the length to attain the program counter to the next instruction.

All program counters **420, 422, 424** and **428** in the macroinstruction decoder **230** are initialized during instruction and exception processing. A plurality of signal sources activate this initialization. First, the branch unit **234** supplies a target branch address when a PC-relative transfer control instruction is decoded and predicted taken. Second, a return address stack (not shown) supplies a predicted return target address when a near RET instruction is decoded. Third, the scheduler **260** generates a correct and alternate branch address when the macroinstruction decoder **230,** along with the remaining circuits in the processor **120,** is restarted by the scheduler **260** due to a mispredicted branch condition (BRCOND) operation. Fourth, register unit **244,** the primary RegOp execution unit, supplies a new decode address when a WRIP RegOp is executed. The WRIP RegOp execution allows emulation code to explicitly redirect instruction decoding. In all four cases, a logical address is supplied and utilized to simultaneously reinitialize the three decode program counters **420, 422** and **424.** For the linear decode PC **424,** a linear address value is supplied by adding the supplied logical address to the current code segment base address to produce the corresponding linear address for loading into linear decode PC **424.** The logical address is loaded into the current instruction PC **420** and the logical decode PC **422.** For each decode cycle until a next reinitialization, the macroinstruction decoder **230** sequentially and synchronously updates the current instruction PC **420**, the logical decode PC **422** and the linear decode PC **424** as instruction bytes are successfully decoded and consumed by the individual decoders of macroinstruction decoder **230.**

Generation of the instruction lengths Ilen0 and Ilen1 occurs serially. To hasten this serial process by emulating a parallel operation, instruction length lookahead logic **436** quickly determines the instruction lengths Ilen0 and Ilen I using four predecode bits specifying the length of each instruction byte in the instruction buffer **408.** The predecode bits associated with the opcode byte of the first instruction byte in the instruction buffer 408, the first instruction byte being multiplexed to the first short decoder SDec0 **410,** directly specifies a byte index of the opcode byte of the second instruction byte in the instruction buffer **408.** The predecode bits associated with the opcode byte of the second instruction byte in the instruction buffer **408,** the second instruction byte being multiplexed to the second short decoder SDec1 **412,** directly specifies a byte index of the opcode byte of the third instruction byte in the instruction buffer **408.** The instruction length lookahead logic **436** includes two four-bit-wide 16:1 multiplexers for generating the byte indices of the opcode bytes of the second and third instruction bytes in the instruction buffer **408.**

The instruction lookahead logic **436** also includes logic for determining validity of the sets of predecode bits. Predecode bits are valid when the associated instruction byte is the start of a valid short decode instruction. Specifically, the instruction lookahead logic **436** determines whether predecode bits for a given byte in the instruction buffer **408** point to the same byte, implying a zero length for an instruction starting at that byte. If so, that byte is not the start of a short decode instruction and no further short decoding is possible. Otherwise, a short decode operation is possible and predecode bits point to the beginning of the next instruction.

The predecoder **270** connected between the main memory **130** and the instruction cache **214** has eight logic units, each of which examines its associated instruction byte plus, in some cases, the following one or two instruction bytes. The first instruction byte is decoded as an opcode byte and the second and third instruction bytes, if the opcode byte is a modr/m opcode, are decoded as modr/m and sib bytes. Based on these three bytes, the length of an instruction and whether the instruction is classified as a "short" instruction are determined. The length of the instruction is added to a four-bit fixed value corresponding to the position of the logic unit with respect to the sixteen logic units to determine the byte index used by the instruction length lookahead logic **436**. This byte index is set as the value of the predecode bits if the instruction falls within the criteria of a short instruction. For instruction bytes not meeting the short instruction criteria. the predecode bits are set to the four-bit fixed value corresponding to the position of the logic unit with respect to the sixteen logic units without increment to designate an instruction length of zero. An implied instruction length of zero is indicative that the instruction is not a short instruction. The predecode bits are truncated from four bits to three since short decode instructions are never longer than seven bytes and the most significant bit is easily reconstructed from the three predecode bits and the associated fixed byte address. The expansion from three to four predecode bits is performed by predecode expansion logic **440** having sixteen logic units corresponding to the sixteen instruction bytes of the instruction cache **214**. The sixteen logic units of predecode expansion logic **440** operate independently and simultaneously on predecode bits as the instruction bytes are fetched from the instruction cache **214** to the instruction buffer **408.**

The final two of the thirty-two instruction bytes that are predecoded and loaded to the instruction cache **214** have only one or two bytes for examination by the predecoder **270.** For modr/m opcodes the full instruction length cannot be determined. Thus logic units for bytes 14 and 15 in the predecoder **270** are modified from logic units for bytes 0 through 13. For instruction byte 15, logic unit 15 of the predecoder **270** forces an instruction length of zero for all modr/m opcodes and for non-short decode instructions. For instruction byte 14, an effective instruction length of zero is forced for modr/m opcodes with an address mode requiring examination of a sib byte to reliably determine instruction length, as well as for non-short instructions.

During each decode cycle, the macroinstruction decoder **230** checks for several exception conditions, including an instruction breakpoint, a pending nonmaskable interrupt (NMI), a pending interrupt (INTR), a code segment overrun, an instruction fetch page fault, an instruction length greater than sixteen bytes, a nonlockable instruction with a LOCK prefix, a floating point not available condition, and a pending floating point error condition. Some conditions are evaluated only during a successful decode cycle, other conditions are evaluated irrespective of any decoding actions during the cycle. When an active exception condition is detected, all instruction decode cycles including short, long and vectoring decode cycles, are inhibited and an "exception" vectoring decode is forced in the decode cycle following exception detection. The recognition of an exception condition is only overridden or inhibited by inactivity of the macroinstruction decoder **230**, for example, when emulation code Op quads are accepted by the scheduler **260.** rather than short and long or vector decoder Op quads, In effect, recognition and handling of any exception conditions are delayed until an ERET Op seq returns control to the macroinstruction decoder **230**.

During the decode cycle that forces exception vectoring, a special emulation code vector address is generated in place of a normal instruction vector address. The vectoring Op quad that is generated by the long and vectoring decoders **416** and **418** is undefined. The exception vector address is a fixed value except for low-order bits for identifying the particular exception condition that is recognized and handled. When multiple exception conditions are detected simultaneously, the exceptions are ordered in a priority order and the highest priority exception is recognized.

The instruction breakpoint exception, the highest priority exception condition, is recognized when the linear decode PC **424** points to the first byte of an instruction including prefixes, the linear decode PC **424** matches a breakpoint address that is enabled as an instruction breakpoint, and none of the instruction breakpoint mask flags are clear. One mask flag (RF) specifically masks recognition of instruction breakpoints. Another mask flag (BNTF) temporarily masks NMI requests and instruction breakpoints.

The pending NMI exception, the penultimate priority exception, is recognized when an NMI request is pending and none of the NMI mask flags are clear. One mask (NF) specifically masks nonmaskable interrupts. Another mask flag (BNTF) temporarily masks NMI requests and instruction breakpoints.

The pending INTR exception, the next exception in priority following the pending NMI exception, is recognized when an INTR request is pending and the interrupt flag (IF) and temporary interrupt flag (ITF) are clear.

The code segment overrun exception, the next exception in priority following the pending INTR exception, is recognized when the macroinstruction decoder **230** attempts to successfully decode a set of instructions beyond a current code segment limit.

The instruction fetch page fault exception, having a priority immediately lower than the code segment overrun exception, is recognized when the macroinstruction decoder **230** requires additional valid instruction bytes from the instruction buffer **408** before decoding of another instruction or prefix byte is possible and the instruction translation lookaside buffer (ITB) signals that a page fault has occurred on the current instruction fetch. A faulting condition of the instruction fetch control circuit **218** is repeatedly retried so that the ITB continually reports a page fault until the page fault is recognized by the macroinstruction decoder **230** and subsequent exception handling processing stops and redirects instruction fetching to a new address. The fault indication from the ITB has the same timing as instructions loaded from the instruction cache **214** and, therefore, is registered in the subsequent decode cycle. The ITB does not necessarily signal a fault on consecutive instruction fetch attempts so that the macroinstruction decoder **230** holds the fault indication until fetching is redirected to a new instruction address. Upon recognition of a page fault, additional fault information is loaded into a special register field.

The instruction length greater than sixteen bytes exception, which has a priority just below the instruction fetch page fault exception, is recognized when the macroinstruction decoder **230** attempts to successfully decode an instruction having a total length including prefix bytes of greater than fifteen bytes. The instruction length greater than sixteen bytes exception is detected by counting the number of prefix bytes before an actual instruction is decoded and computing the length of the rest of the instruction when it is decoded. If the sum of the prefix bytes and the remaining instruction length is greater than sixteen bytes, an error is recognized.

The nonlockable instruction with a LOCK prefix exception, having a priority below the instruction length exception. is recognized when the macroinstruction decoder **230** attempts to successfully decode an instruction having a LOCK prefix, in which the instruction is not included in the lockable instruction subset. The nonlockable LOCK instruction exception is detected based on decode of the opcode byte and existence of a 0F prefix. The nonlockable LOCK instruction exception only occurs during vectoring decode cycles since the LOCK prefix inhibits short and long decodes.

The floating point not available exception, having a next to lowest priority, is recognized when the macroinstruction decoder **230** attempts to successfully decode a WAIT instruction or an ESC instruction that is ont a processor control ESC, and the reporting of a floating point error is pending. Macroinstruction decoder **230** detects the floating point not available exception based on decoding of an opcode and modr/m byte, in addition to the existence of a 0F prefix.

During each decode cycle, the macroinstruction decoder **230** attempts to perform some form of instruction decode of one or more instructions. Typically, the macroinstruction decoder **230** succeeds in performing either one or multiple short decodes, one long decode or an instruction vectoring decode. Occasionally no decode is successful for three types of conditions including detection of an active exception condition, lack of a sufficient number of valid bytes in the instruction buffer **408**, or the macroinstruction decoder **230** does not advance due to an external reason.

When an active exception condition is detected all forms of instruction decode are inhibited and, during the second decode cycle after detection of the exception condition, an exception vectoring decode cycle is forced, producing an invalid Op quad.

When an insufficient number of valid bytes are available in the instruction buffer **408** either no valid bytes are held in the instruction buffer **408** or at least the first opcode is valid and one of the decoders decodes the instruction but the decoded instruction length requires further valid bytes in the instruction buffer **408**, not all of which are currently available.

When an external reason prevents macroinstruction decoder **230** advancement either the scheduler **260** is full and unable to accept an additional Op quad during a decode cycle or the scheduler **260** is currently accepting emulation code Op quads so that the macroinstruction decoder **230** is inactive awaiting a return to decoding.

In the latter two cases, the decode state of the macroinstruction decoder 230 is inhibited from advancing and the macroinstruction decoder 230 simply retries the same decodes in the next decode cycle. Control of macroinstruction decoder 230 inhibition is based on the generation of a set of decode valid signals with a signal corresponding to each of the decoders. For each decoder there are multiple reasons which are combined into decoder valid signals to determine whether that decoder is able to successfully perform a decode. The decoder valid signals for all of the decoders are then monitored, in combination, to determine the type of decode cycle to perform. The type of decode cycle is indicative of the particular decoder to perform the decode. The extemal considerations are also appraised to determine whether the selected decode cycle type is to succeed. Signals indicative of the selected type of decode cycle select between various signals internal to the macroinstruction decoder **230** generated by the different decoders, such as alternative next decode PC values, and also are applied to control an Op quad multiplexer **444** which selects the input Op quad applied to the scheduler **260** from the Op quads generated by the short decoders, the long decoder **416** and the vectoring decoder **418**.

In the case of vectoring decode cycles, the macroinstruction decoder **230** also generates signals that initiate vectoring to an entry point in either internal emulation code ROM **232** or external emulation code RAM **236**. The macroinstruction decoder **230** then monitors the active duration of emulation code fetching and loading into the scheduler **260**.

The instruction decoder **220** includes the branch unit (not shown) for performing branch prediction so that operations are speculatively executed. Performance of an out-of-order processor is enhanced when branches are handled quickly and accurately so that pipeline-draining mispredictions are avoided. The processor **120** employs a two-level branch prediction algorithm that is disclosed in detail in U.S. Patent No. 5,454,117, entitled CONFIGURABLE BRANCH PREDICTION FOR A PROCESSOR PERFORMING SPECULATIVE EXECUTION (Puziol et al., issued September 26. 1995), U.S. Patent No. 5.327.547, entitled TWO-LEVEL BRANCH PREDICTION CACHE (Stiles et al.. issued July 5, 1994), U.S. Patent No. 5,163,140, entitled TWO-LEVEL BRANCH PREDICTION CACHE (Stiles et al., issued November 10, 1992), and U.S. Patent No. 5, 093,778, entitled INTEGRATED SINGLE STRUCTURE BRANCH PREDICTION CACHE (Favor et al., issued March 3, 1993). The processor **120** further utilizes an 8,192-entry branch history table (BHT) (not shown) which is indexed by combining four program counter bits with nine bits of global branch history. Each BHT entry contains two history bits. The BHT is a dual-port RAM allowing both a read/lookup access and a write/update access. BHT lookups and updates do not conflict since they take place in opposite half phases of a clock cycle. The large number of entries of the BHT is supplied in a reasonable integrated circuit area because the BHT is only predicting conditional branch directions so that entries are not tagged and predicted branch target addresses are not stored, except for a 16-entry return address stack (not shown). Accordingly, an access to the BHT is similar to a direct mapping into a cache-like structure in which the the BHT is indexed to access an entry in the BHT and the accessed entry is presumed to be a branch instruction. For branches other than returns, the target address is calculated during the decode cycle. The target address is calculated with sufficient speed using a plurality of parallel adders (not shown) that calculate all possible target addresses before the location of a branch instruction is known. By the end of the decode cycle, the branch unit **234** determines which, if any, target address result is valid.

If a branch is predicted taken, the target address is immediately known and the target instructions are fetched on the following cycle, causing a one-cycle taken-branch penalty. The taken-branch penalty is avoided using a branch target buffer (BTB) **456.** The BTB **456** includes sixteen entries, each entry having sixteen instruction bytes with associated predecode bits. The BTB **456** is indexed by the branch address and is accessed during the decode cycle. Instructions from the BTB **456** are sent to the instruction decoder **220.** eliminating the taken-branch penalty, for a cache hit of the BTB **456** when the BHT (not shown) predicts a taken branch.

During each decode cycle, the linear decode PC **424** is used in a direct-mapped manner to address the **BTB 456.** If a hit, which is realized before the end of the decode cycle, occurs with a BTB entry, a PC-relative conditional transfer control instruction is decoded by a short decoder and the control transfer is predicted taken, then two actions occur. First, the initial target linear fetch address directed to the instruction cache **214** is changed from the actual target address to a value which points to an instruction byte immediately following the valid target bytes contained in the BTB entry. This modified fetch address is contained in the BTB entry and directly accessed from the BTB entry. Second, the instruction byte and predecode information from the entry is loaded into the instruction buffer **408** at the end of the decode cycle. If a PC-relative conditional transfer control instruction is decoded by a short decoder and the control transfer is predicted taken, but a miss occurs, then a new BTB entry is created with the results of the target instruction fetch. Specifically, simultaneously with the first successful load of target instruction bytes into the instruction buffer **408** from the instruction cache **214**, the same information is loaded into a chosen BTB entry, replacing the previous contents. The target fetch and instruction buffer **408** load otherwise proceed normally.

Each entry includes a tag part and a data part. The data part holds sixteen extended instruction bytes including a memory byte and three associated predecode bits. The correspondence of the memory byte is memory-aligned with the corresponding instruction buffer **408** location. The tag part of a BTB entry holds a 30-bit tag including the 32-bit linear decode PC **424** associated with the transfer control instruction having a cached target, less bits [4:1], an entry valid bit and the 30-bit modified initial target linear instruction fetch address. No explicit instruction word valid bits are used since the distance between the true target address and the modified target address directly implies the number and designation of valid instruction words within the BTB **456.**

The purpose of the BTB **456** is to capture branch targets within small to medium sized loops for the time period a loop and nested loops are actively executed. In accordance with this purpose, at detection of a slightest possibility of an inconsistency, the entire BTB is invalidated and flushed. The BTB **456** is invalidated and flushed upon a miss of the instruction cache **214.** any form of invalidation of instruction cache **214,** an ITB miss, or any form of ITB invalidation. Branch targets outside temporal or spatial locality are not effectively cached. Typically, the BTB **456** contains only a small number of entries so that complexity is reduced while the majority of performance benefit of ideal branch target caching is achieved.

PC-relative branch target address calculation logic (not shown) performs the target address calculation. Branch target address calculation logic is utilized only for PC-relative transfer control instructions that are decoded by a short decoder SDec0 **410,** SDec1 **414** or SDec2 **416.** Specifically, the branch target address calculation logic is utilized for the short decode branch instructions including Jcc disp8, LOOP disp8, JMP disp8, JMP disp16/32, and CALL disp 16/32. Each short decoder SDec0 **410.** SDec1 **412** and SDec2 **414** includes logical and linear branch target address calculation logic (not shown). All three sets of logical and linear branch target address calculation logic function in parallel while the short decoders **410, 412** and **414** determine whether any of the operations is a PC-relative short decode branch instruction. The logical and linear branch target address calculation logic sum the logical program counter of the branch, the length of the branch instruction and the sign-extended displacement of the branch instruction and conditionally mask the high-order 16 bits of the sum, depending on calculation sizing, to produce a logical target address. The logical and linear branch target address calculation logic sum the logical target address with the current code segment base address to produce a linear target address. If the branch is taken, either unconditionally or predicted taken, then calculated addresses corresponding to the decoded short decode branch instruction are used to reinitialize the logical decode PC **422** and linear decode PC **424**. If the branch is predicted not taken, the logical address is saved with the associated short decode branch instruction (BRCOND Op) in a scheduler **260** Op quad entry. The logical target address is compared to the current code segment limit value to monitor for a limit violation.

If the logical and linear branch target address calculation logic detects a limit violation, whether the branch is predicted taken or predicted not taken, then a special tag bit indicative of the limit violation is set in the scheduler **260** Op quad entry holding the operations generated from the branch instruction. Subsequently, when the operation commit unit (OCU) of the scheduler **260** attempts to commit this Op quad, the Op quad is handled as containing a fault and aborted. The macroinstruction decoder **230** generates signals that initiate vectoring to a fault handler in emulation code ROM **232**. The fault handler temporarily inhibits decoding by the short and long decoders and jumps to the fault PC address of the violating instruction associated with the faulted Op quad. Ultimately, the branch instruction is redecoded and vectored to instruction emulation code. The emulation code recognizes the limit violation if the branch is actually taken and appropriately handles the violation.

The processor **120** generally responds to a fault condition by vectoring to a specific fault handler in the emulation code ROM **232.** The fault handler includes operations defined within the RISC instruction set which perform a routine that determines the source of the fault, an appropriate response to the fault and steps to initiate the appropriate response. As an alternative in appropriate cases, the processor **120** also includes a special "load alternate fault handler" operation which initiates a special fault response. Exceptions that are detected during decode time direct execution to a fixed set of entry points, one entry point for each possible exception condition through operation of the vectoring decoder **418** which activates the alternate fault handler and designates a fault handler address. The alternate fault handler is advantageous for allowing modified full handling of special conditions. The load alternate fault handler instruction passes through the instruction decoder **220** pipeline in the manner of all instructions, but causes any subsequent exception condition to invoke a different vector instruction ROM entry point. The alternate fault handler terminates upon completion of execution of the current macroinstruction.

One example of the advantage of the alternate fault handler arises with respect to a repeated move string instruction (REP MOVs). To perform multiple interations very quickly, a capability to reorder the sequence of operations is important. The sequence of operations typically includes a load to a first pointer-designated address, a store to a second pointer-designated address and, if both the load and store are successful, an increment of the first and second pointers and a decrement of a counter. For additional efficiency, the pointers are incremented and the counter decremented before completing the store operation. However, if a fault or exception occurs during the sequence of operations, the sequence is aborted with the counters and pointers in the wrong state. For example, the architectural x86 SI, DI and CX registers do not have the correct value. The alternate fault handler is used by specifying, prior to the sequence, an alternate fault handler that performs a cleanup after a repeated move fault. The sequence proceeds without the overhead of intermediate instructions for tracking the pointers and counters. If no errors occur, the alternate fault handler terminates without effect. However, if an error occurs, the alternate fault handler is invoked. This alternate fault handler is specific to the particular sequence of operations and performs clean-up accordingly and jumps to the default fault handler. Advantageously, highly efficient code improves speed performance without hindrance from the alternate fault handler until an error arises, at which time the error is addressed.

The branch history table (BHT) stores recent history information, particularly branch direction information, about conditional transfer control instructions that have been encountered in the past. When a branch is repeated, stored information relating to the branch is analyzed to predict the current direction of the branch. Subsequently, the stored information is updated based on the actual direction taken by the branch. The stored information is derived from the direction of a particular newly encountered branch, the recent direction history of the particular branch and the recent direction history of other branches. The stored information is based on a plurality of sets of two-bit state machines and also on a direction history of the last nine branch executions, whether the last nine branch executions pertained to the particular branch or other branches. The instruction address of the particular newly encountered branch is used to select one of the plurality of sets of two-bit state machines. The direction history of the last nine branch executions is used to select a particular two-bit state machine in the selected set of state machines. Each state machine is a two-bit saturating counter for counting the directions taken by the most recent few branches that accessed this particular state machine. Typically a particular state machine is accessed by the same static branch, although other branches may access the same state machine. A larger state machine value is indicative of more taken instances of a branch. A smaller state machine value is indicative of more not taken instances of a branch. Upon selection of a state machine, the state machine is accessed. If the present overall count is "greater" then a branch is predicted taken. If the present overall count is "lesser" then a branch is predicted not taken. The direction history of the most recent nine branch executions is held in a nine-bit shift register which is clocked or shifted each time a branch instruction is successfully decoded. The immediate branch direction just predicted is the new direction history value that is shifted into the shift register. A history bit value of one indicates a branch taken. A history bit value of zero indicates a branch not taken.

During a decode cycle, the linear decode PC **424** is used to perform a BHT table lookup. If a PC-relative branch instruction is decoded. then the accessed state machine immediately predicts the branch direction, although the actual instruction subsequently fetched and decoded is determined at the end of the decode cycle by the macroinstruction decoder **230.** Subsequently, the branch condition (BRCOND) operation generated by decoding of the conditional branch instruction is resolved by logic in the scheduler **260,** at which time the state machine is updated. If the branch is actually taken, the state machine is decremented unless already at the maximum value (3). If the branch is actually not taken, the state machine is incremented unless already at a minimum value (0). Accordingly, a state machine value of 0 and 1 respectively indicate a strong and a mild prediction of a branch not taken. A state machine value of 2 and 3 respectively indicate a mild and a strong prediction of a branch taken. To support updating of BHT entries, a copy of the branch address and direction history bits for accessing the BHT and a copy of the state machine value are passed to the scheduler **260** along with the branch condition (BRCOND) operation. Since a maximum of one BRCOND is included in an Op quad, the BHT support information is tagged to the Op quad applied to the scheduler **260**. It is advantageous for reducing circuit size and complexity that the BHT does not contain entry tags (addresses of linear decode PC **424** associated with decoded conditional branches) that are typical in cache structures. It is further advantageous that the BHT has a large number of entries so that the contention rate is low.

The information saved in a scheduler **260** Op quad along with an associated BRCOND operation has a width of fifteen bits including four branch address bits, nine current history bits, and the immediately accessed two state machine bits, the upper bit of which is also the predicted direction for the immediate branch. The first thirteen bits are used, when necessary, to reaccess the BHT and to update a state machine value. The final two bits are modified to create the new state machine value.

When a branch is mispredicted, the set of history values in the nine-bit branch history shift register are corrected to reflect the actual direction taken by the branch. Furthermore, the shift register is "shifted back" to correspond to the mispredicted branch, then updated based on the actual branch direction and which branch direction was predicted.

A return address stack (RAS) (not shown) is a target address cache for return (RET) transfer control instructions. RAS is an eight entry, 32-bit wide. single-ported RAM that is managed as a circular buffer using a single three-bit pointer. During each cycle at most one access, either a read access for a RET decode or a write access for a CALL decode, is performed. RAS caches RET return addresses and predicts return addresses which inherently specify a target address indirectly, in contrast to other transfer control instructions that contain a direct specification of target address. RAS is advantageously utilized since a particular RET instruction often changes target address between different executions of the instruction. RAS discovers and anticipates the target address value for each RET instruction execution through monitoring of the return addresses that are saved - pushed on a stack - by CALL instructions. Corresponding CALL and RET instructions typically occur dynamically in pai. d in last-in-first-out LIFO order with respect to other CALL and RET instruction pairs.

Each time a CALL instruction is successfully decoded, the logical return address of the CALL instruction is saved (pushed) to a circular buffer managed as a LIFO stack. Each time a RET instruction is successfully decoded. the return address value currently on the top of the RAS is employed as the predicted target address for the RET and the value is popped from the RAS. RAS achieves a high prediction rate although mispredictions do occur because CALLS and RETs do not always occur in nested pairs. only near CALLS and RETs and not far CALLS and RETs are supported, and mispredictions occur because of the finite depth of the RAS. When a conditional branch misprediction occurs, RAS attempts to restore the state prior to misprediction by setting the top of stack pointer to the previous condition because CALL and RET instructions may have been speculatively decoded and the top-of-stack pointer thereby modified. The original pointer, before the misprediction, is to be restored. Restoration following a misprediction is supported by the scheduler **260**. Each scheduler **260** Op quad is tagged with a current initial top-of-stack pointer value in effect during the decode cycle in which the Op quad was generated. When the BRCOND Op generated for a conditional branch instruction is resolved and found to be mispredicted, the top-of-stack pointer tagged to the scheduler Op quad is supplied to the RAS during a restart cycle that is generated by the scheduler **260**. RAS replaces the current top-of-stack value with the scheduler Op quad top-of-stack pointer tag.

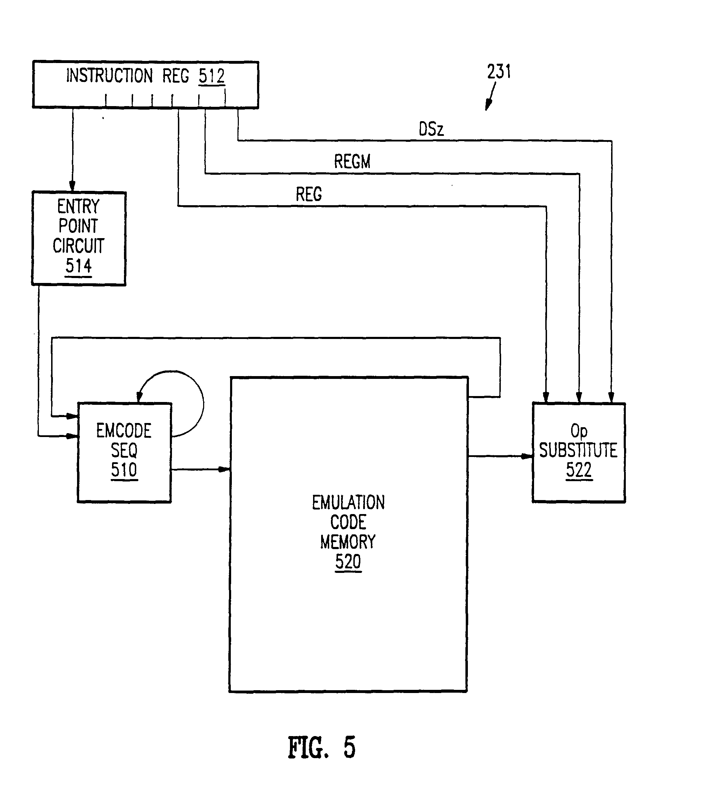

Referring to **Figure 5**, a schematic block diagram depicts an instruction decoder emulation circuit **231** including an instruction register **512,** an entry point circuit **514,** an emulation environment register **516,** an emulation code sequencer **510,** an emulation code memory **520** and an Op substitution circuit **522.** The instruction decoder emulation circuit **231** is a circuit within the instruction decoder **220.** The instruction decoder emulation circuit **231** receives instruction bytes and associated predecode information from the instruction buffer **408** connected to the instruction fetch control circuit **218,** the BTB **456** or the instruction cache **214.** The instruction buffer **408** is connected to and supplies the instruction register **512** with x86 instructions. The instruction register **512** is connected to the entry point circuit **514** to supply emulation code ROM entry points. The entry point circuit **514** receives the x86 instruction and. from the x86 instruction operation code (opcode), generates an entry point address, a beginning address pointing into the emulation code memory **520.** In this manner an address of an instruction in emulation code memory **520** is synthesized from the opcode of an x86 instruction. The address is derived based on the x86 instruction byte, particularly the first and second bytes of the x86 instruction as well as information such as the modem byte, prefixes REP and REPE, the protected mode bit and effective data size bit DSz Generally, closely related x86 instructions have similarly coded bit fields, for example a bit field indicative of instruction type is the same among related x86 instructions. so that a single entry in the emulation code memory **520** corresponds to several x86 instructions. Entry points are generally synthesized by reading the x86 instructions and assigning bits of the entry point address according to the values of particular x86 instruction bit fields. The instruction register **512** is connected to the emulation code sequencer **510** which, in turn, is connected to the emulation code memory **520**. The emulation code sequencer **510** applies the entry point to the emulation code memory **520** and receives sequencing information from the emulation code memory **520.** The emulation code sequencer **510** either controls the sequencing of instructions or, when a new sequence is to be started, applies an entry point to the emulation code memory **520**. Operations (Ops) encoded in the emulation code memory **520** are output by the emulation code memory **520** to the Op substitution circuit as Op quads or Op units. The Ops correspond to a template for RISC-type x86 operation. This template includes a plurality of fields into which codes are selectively substituted. The emulation code memory **520** is connected to the Op substitution circuit **522** to supply Ops into which the various Op fields are selectively substituted. Functionally, the entry point circuit **514** calculates an entry point into the emulation code ROM **232** or emulation code RAM **236.** The sequence in emulation code ROM **232** determines the functionality of an instruction.

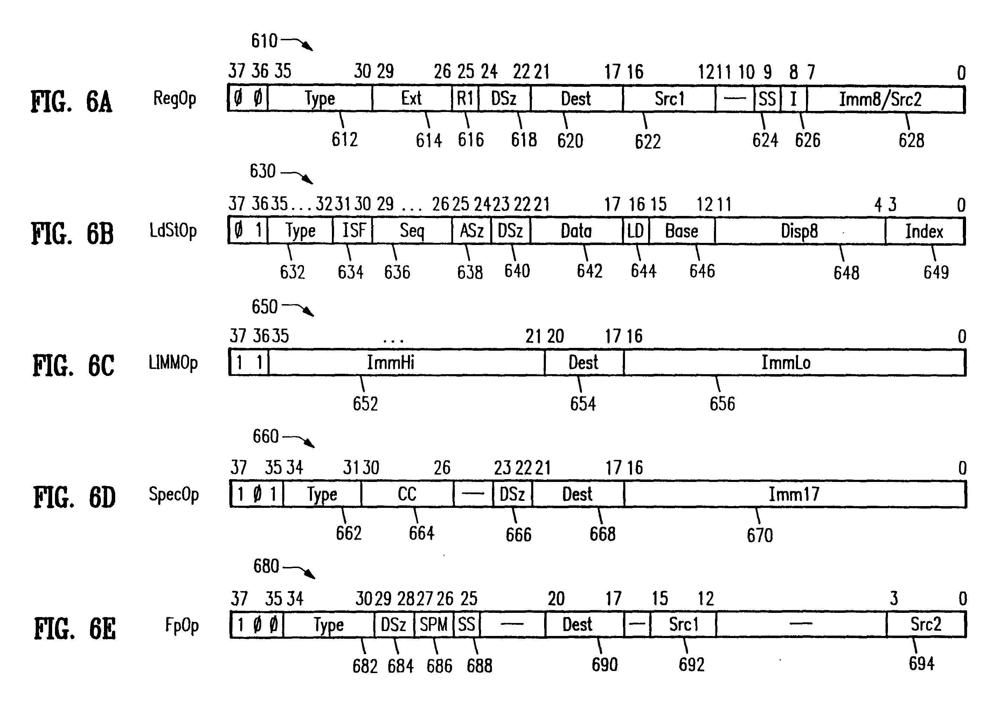

The emulation code memory **520** includes an on-chip emulation code ROM **232** and an external emulation code RAM **236**. The emulation code memory **520** includes encoded operations that direct how the processor **120** functions and defines how x86 instructions are executed. Both the emulation code ROM **232** and RAM **236** include a plurality of operation (Op) instruction encodings having a Op coding format that is the same in ROM **232** and RAM **236.** For example, in one embodiment the emulation code ROM **232** has a capacity of 4K 64-bit words. The Op coding format is typically a format defined in 30 to 40-bits for example. In one embodiment, a 38-bit format, shown in Figures 6A through 6E, is defined. The emulation code ROM **232** base address location within the emulation space is fixed. The external emulation code RAM **236** is resident in standard memory address space within cacheable memory. The emulation code RAM **236** base address location within the emulation space is fixed. The 32-bit emulation code RAM **236** address is formed by the fixed base address of the emulation code RAM **236** which supplies bits the most significant fifteen bits <31:17>, and the Op address which furnishes fourteen bits <16:3> concatenated to the base address bits. The two least significant bits <1:0> of the emulation code RAM address are set to zero. The fourteen bit Op address in emulation code RAM **236** is the same as the Op address in emulation code ROM **232**. Operations (Ops) are stored in Op coding format, for example 38-bits, in the external emulation code RAM **236** in 64-bit words. Bits in excess of the Op coding format bits of the 64-bit words are used to store control transfer (OpSeq) information. The external emulation code RAM **236** is typically used for test and debug purposes, allowing for patching of any instruction encoded in the emulation code ROM **232,** and for implementing special functions such as system management mode (SMM). For example, if an instruction in emulation code ROM **232** is found to function improperly, the external emulation code RAM **236** is accessed to temporarily or permanently substitute for the improperly-functioning fixed code in the emulation code ROM **232.** Access to the external emulation code RAM **236** is typically gained using one of two techniques. In a first technique, a one-bit field in an OpSeq field of an element of emulation code memory **520** designates that the next address for fetching instructions is located in external emulation code RAM **236.** In this first technique, the on-chip emulation code ROM **232** initiates execution of the external emulation code RAM **236.** In a second technique, a. vector address is simply supplied for vectoring to an entry point in the emulation code RAM **236.**

The instruction cache **214**, instruction fetch control circuit **218** and instruction decoder **220** function in three instruction fetch and decode modes. In a first mode, the instruction decoder **220** fetches emulation code Op quads from the on-chip emulation code ROM **232**. Each Op quad includes four operations (Ops) plus control transfer information (OpSeq) for determining the next cycle of fetch and decode function. In a second mode, the instruction fetch control circuit **218** controls fetching of x86 macroinstruction bytes from the instruction cache **214,** which is part of the on-chip L1 instruction cache **214**. The x86 macroinstructions are decoded by the macroinstruction decoder **230.** which generates four operations (Ops). Four Ops plus the OpSeq field form a full Op quad. The instruction decoder **220** performs any coded control transfers using the branch unit **234** and vectoring functionality of the macroinstruction decoder **230.** In a third mode, the instruction fetch control circuit **218** controls fetching of 64-bit words containing emulation code in Op coding format from the instruction cache **214**, one 64-bit word per cycle. Each 64-bit word corresponds to a single operation (Op). In other embodiments, a plurality of 64-bit words may be accessed per cycle. An embodiment in which four 64-bit words are accessed, the emulation code RAM **236** supplies a full Op quad in the manner of the on-chip emulation code ROM **232** so that a fully-reprogrammable processor with full efficiency is achieved. A fully-reprogrammable processor advantageously permits soft implementation of greatly differing processors, for example an x86 processor and a PowerPCÔ in a single hardware.

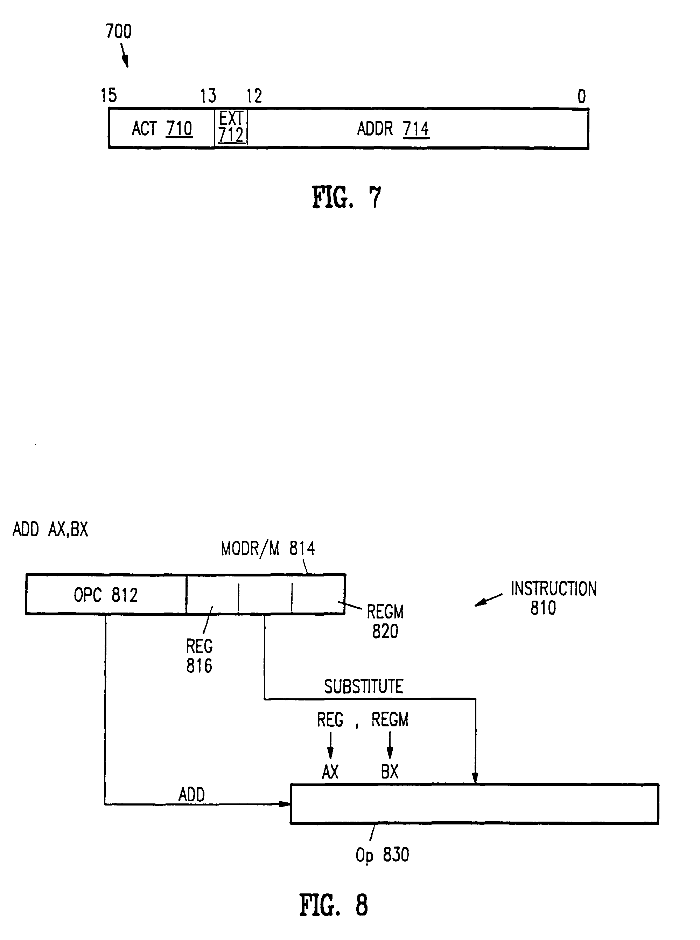

In the first and third operating three modes, control transfer information is formatted into an operation sequencing (Opseq) field of the Op quad. Unconditional control transfers, such as branch (BR) and return from emulation (ERET) operations, are controlled completely using the Opseq control transfer information. Conditional transfers, such as branch on condition (BRcc), are controlled using a combination of the Opseq field and a branch condition (BRCOND) operation. An OpSeq field format graphic is shown in **Figure 7.** The 16-bit OpSeq field **700** includes a two-bit sequencing action (ACT) field **710**, a single-bit external emcode field **712** and a 13-bit operation (Op) address field **714**. Four sequencing actions in the ACT field **710** are encoded, as follows:

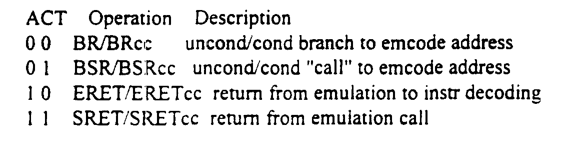

Whether a sequencing action of an OpSeq is unconditional or conditional depends on the presence or absence, respectively, of a branch condition (BRCOND) Op elsewhere within the Op quad. The BRCOND Op within the Op quad specifies the condition to be tested and the alternate emulation code target address. No explicit static branch direction prediction bit exists. Instead the predicted action and next address are always specified by the OpSeq field **700** and the "not predicted" next address is always specified by the BRCOND Op. A BRCOND Op is always paired with a BSR sequencing action including unconditional calls. For unconditional and conditional "predicted-taken" calls, the BRCOND Op specifies the return address to be saved.

The external emcode field **712** is set to one if emulation code to be executed is located in external emulation code RAM **236**. The external emcode field **712** is set to zero if emulation code to be executed is located in internal emulation code ROM **232.** The Op address field **714** designates an address of a target Op within a non-entry point Op quad.

The Opseq control transfer information controls unconditional control transfers when an Op quad or 64-bit memory word is fetched and arranged or "instantaneously decoded". Designation of the next instruction to be decoded is controlled by the Opseq field alone. The Opseq field specifies one of three alternative actions. First, the Opseq field directs fetching of emulation code from emulation code ROM **232** at a specified 14-bit single operation word address so that an emulation code ROM **232** Op quad is fetched. Second, the Opseq field directs fetching of emulation code from emulation code RAM **236** at a specified 14-bit single operation word address so that an emulation code RAM **232** 64-bit memory word is fetched. Third, the Opseq field includes a return from emulation (ERET) directive, which directs the instruction decoder **230** to return to x86 microinstruction decoding.

Emulation code fetched from the emulation code ROM **232** is fetched in the form of aligned Op quads. A branch to an intermediate location within an Op quad causes the preceding operations within the Op quad to be treated as invalid by fetching NOOPs in place of the preceding operations.

The byte memory addresses for fetching 64-bit memory words from emulation code RAM **236** are created by concatenating a specified 14-bit operation address with three least significant bits set to zero, thereby creating an aligned 8-bit address. The byte memory addresses for fetching 64-bit memory words are 8-bit aligned, thus rendering memory Op decoding and fetch/decode advancement consistent and simple.

The Opseq control transfer information also controls designation of the immediate next instruction to be decoded for conditional control transfers. The branch condition (BRCOND) operation specifies the condition code to be tested and evaluated and specifies an alternative 14-bit emulation code fetch and decode address. Thus, Opseq control transfer information for conditional control transfers effectively specifies the predicted path of the conditional branch. The BRCOND address typically is either the 14-bit target Op word address or the 14-bit Op word address of the next "sequential" operation (Op). More generally, the BRCOND address may specify a fully general two-way conditional branch. Note that the word sequential is placed in quotation marks to indicate that, although the "sequential" address generally points to an instruction which immediately precedes the present instruction, the "sequential" address may be set to any addressed location. A conditional ERET operation is implemented by setting the Opseq field to specify an ERET operation so that the conditional ERET is predicted taken. If the ERET operation is subsequently found to be mispredicted, then the x86 macroinstruction stream directed by the ERET is aborted and the sequential macroinstruction stream specified by the BRCOND operation is restarted.

BRCOND operations are loaded into the scheduler **260** in an unissued state. BRCOND operations are evaluated in-order by the branch resolution unit of the scheduler **260**. If the branch is properly predicted, the branch is marked Completed. Otherwise, the BRCOND state is left unissued and triggers a branch abort signal when detected by the Op commit unit.

The emulation code memory **520** supports a single-level (no nesting) subroutine functionality, in which an Opseq field is set to specify alternatives for fetching emulation code. The alternatives are structured as a typical two-way conditional branch, except that a 14-bit Op word address from the immediate field of a BRCOND Op within the Op quad or memory Op is loaded into a subroutine return address register. The subroutine return address register stores the 14-bit Op word address plus a single bit which designates whether the return address is located in emulation code ROM **232** or RAM **236**. The condition code specified by the BRCOND Op may be any alternative, including TRUE, so that both unconditional and conditional (predicted-taken) subroutines may be specified. However, the BRCOND Op must be specified to avoid loading an undefined value into the subroutine return address register.

All emulation code subroutine support and return address register management is performed by the emulation code sequencer **510** at the front of the pipeline. Thus return address register loading and usage is fully synchronous with standard decoder timing so that no delays are introduced.

### Two-Way Emulation Code Branching

The emulation code ROM **232** is storage for a plurality of sequences of operations (Ops). An operation sequence begins at a defined entry point that is hard-coded into the emulation code ROM **232** and extends to a return from emulation (ERET) Opseq directive that ends the operation sequence. The number of operations in a sequence is typically variable as is appropriate for performing various different functions. Some simple x86 instructions have only a single Op entry in the emulation code ROM **232,** although these instructions are fetched with Op quad granularity. Other more complex x86 instructions use many component operations. The emulation code ROM **232** storage is structured as a plurality of Op quads, programmed into a fixed ROM address space. Each Op quad includes four RISC Op fields and one Opseq field. The operation sequences are typically not aligned within the Op quads so that, absent some technique for branching to interspersed locations in emulation code ROM **232**, many ROM units in the emulation code ROM **232** are unusable, wasting valuable integrated circuit space. Furthermore, because the entry point address of an instruction in emulation code ROM **732** is synthesized from the opcode of an x86 instruction, the entry point addresses often are forced into fixed positions spread throughout the ROM address space with intervening gaps that lead to unused portions of ROM. ROM positions that are left without access via an entry point are free for other usage but are not conveniently sequential to allow access. The OpSeq field provides a technique for branching to these interspersed locations, thereby substantially eliminating wasted space.

Each of the four RISC Op fields of an Op quad stores a simple, RISC-like operation. The OpSeq field stores a control code that is communicated to the emulation code sequencer **510** and directs the emulation code sequencer **510** to branch to a next location in the emulation code ROM **232.** Each of the four RISC Op fields in the emulation code ROM **232** may store a branch operation, either conditional or unconditional, and thereby specify a target address so that a plurality of branches may be encoded in a single Op quad. In some embodiments of the instruction decoder emulation circuit **231,** the Op quad is limited to having at most a single branch operation to direct Op order in combination with the OpSeq field. The combination of a conditional branch Op in one of the four RISC Op fields and the OpSeq field in an Op quad yields an Op quad with two possible target or next addresses.

For an Op quad having a plurality of target addresses, the emulation code sequencer **510** directs the sequence of operations by selecting a hard-coded, predicted target address. Thus, for an Op quad including an conditional branch, the emulation code sequencer **510** selects a hardcoded OpSeq target address in preference over the conditional branch. The unconditional branch is subsequently handled in accordance with the branch prediction functionality of the processor **120** so that no additional branch handling overhead is incurred by implementing two-way emulation code branching.

Emulation microcode may be written so that a BRCOND Op is positioned in one of the first three positions of the Op quad. Thus, the Ops following the BRCOND Op within the Op quad are executed based on the predicted direction rather than whether the branch is ultimately taken. If the branch is ultimately found to be correctly predicted, all of the Ops of the Op quad and the Ops of subsequent Op quads are committed to the scheduler **260.** If the branch is ultimately found to be mispredicted, all of the Ops following the BRCOND Op plus all subsequent Op quads are aborted. The emulation code is supplied to include the branch conditions, a target address, a "sequential" address, and also the prediction for the branch condition.

For most instructions, the OpSeq field alone supplies the next fetch address, either a vector address or an ERET return. This is advantageous for simplifying the control hardware, supplying a fast and simple control logic that controls operation fetching without analysis of conditional branching or branch prediction. For conditional branch instructions, the OpSeq field supplies a predicted branch address and a BRCOND operation in the quad specifies a condition code to be evaluated and specifies the alternate fetch address in case of misprediction. The emulation code handling advantageously achieves the flexibility of nonsequential Op quad fetching in which the instruction control sequence is selected by the program with few constraints. Accordingly, the OpSeq field is advantageously used to efficiently fit Op sequences into nonused locations in the emulation code ROM **232**. The emulation code handling also includes the flexibility of optional two-way branching in the case of conditional branches and also in the case of a subroutine call which may be directed to return to substantially any location rather than being constrained to return to the instruction following the calling instruction. This usage of the OpSeq field to branch to a target address advantageously achieves unconditional branching without incurring a time or cycle penalty.

### Emulation Environment Substitution

The emulation code sequencer **510** controls various emulation environment substitutions to substantially expand the number of encoded operations beyond the number of operation entries in the emulation code ROM **232.** The emulation code sequencer **510** includes logic circuits that analyzes specific typically dedicated encodings of an Op field to determine when a substitution is to be made and which substitution is performed. Most encodings directly specify a field value. Other encodings indirectly specify a field value through emulation environment substitution. Usage of emulation mode substitution achieves encoding of CISC functionality while substantially reducing the size of emulation code ROM **232**. advantageously reducing the size and cost of a processor integrated circuit. The Op fields, including the register field and some of the size fields, directly specify a register or specify an indirect register specifier such as AX or T1. Similarly, a field may select RegM which is the direct register specifier. The Op substitution logic analyzes the coding for the indirect register specifier to subsequently define the register coding and substitute the register encoding with the current register. The size fields select one byte, two bytes or four bytes, or select a D-size so that the current effective data size replaces the original encoding. The symbols such as HReg represent particular encodings such as HReg_T2 which is a symbolic representation of the encoding for T2. Illustrative symbols include Hreg, HDSz. HASz. HSegDescr, HSpecOpType and others.

Pseudo-RTL code, as follows, particularly describes the emulation environment substitution operation:

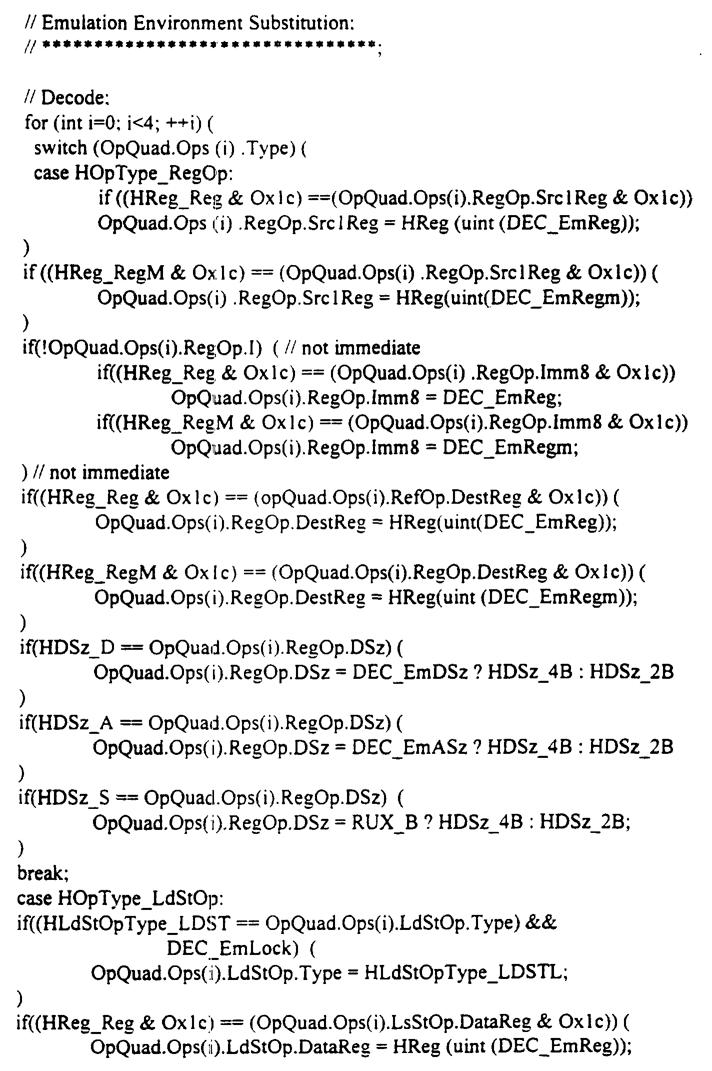

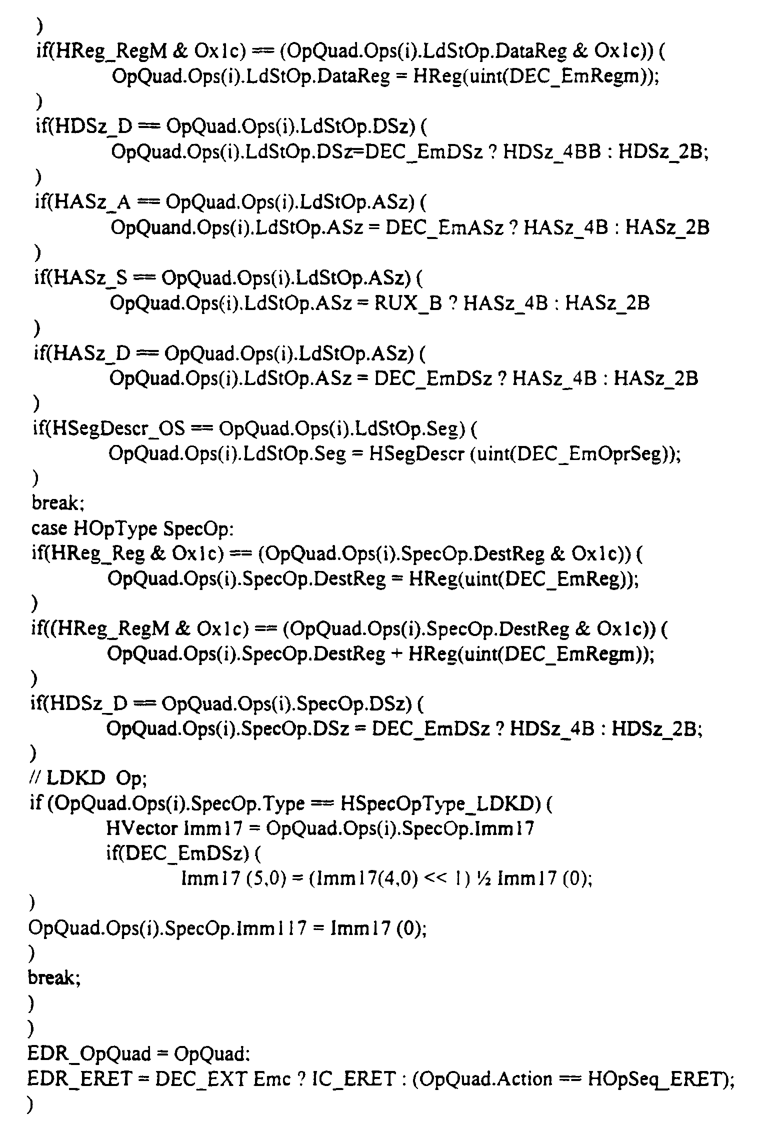

The emulation code sequencer **510** sequences to a next entry point in the emulation code ROM **232**, producing an Op quad. including four operations (Ops) and an Opseq field. For each of the four operations in an Op quad, various substitutions are made, the type of substitution depending on the particular operation type of the five general operation types. The five operation types include register operations (RegOps), load-store operations (LdStOps), load immediate operations (LIMMOps), special operations (SpecOps) and floating point operations (FpOps). Op formats for the five operation types are depicted in **Figures 6A** through **6E**.

The Ops that are produced by the emulation code ROM **232** are generic in nature. In particular, the Ops do not correspond exactly to an x86 instruction. Instead, the Ops from the emulation code ROM **232** form a structure for an x86 instruction. Various bit fields within the Op template are substituted using a substitution function performed by the emulation code sequencer **510.** Simply described. the substitution function substitutes some bits of the Op with other selected bits.

X86 instructions typically include an opcode followed by a modr/m byte. The modr/m byte designates an indexing type or register number to be used in the instruction. The modr/m byte has three fields including a 2-bit (MSB) mode field, a 3-bit (intermediate) reg field and a 3-bit (LSB) r/m field. The mode field combines with the r/m field to form 32 possible values indicative of eight registers and 24 indexing modes. The reg field specifies either a register number or three more bits of opcode information. The r/m field either specifies a register as the location of an operand or is used in combination with the mode field to define registers and indexing modes.

**Figure 6A** is a register operation (RegOp) field encoding graphic that illustrates various fields in the RegOp format. In the RegOp field **610,** most-significant bits 36 and 37 are cleared to designate the operation as a RegOp. The RegOp field **610** also includes a 6-bit operation type (TYPE) field **612** at bit locations [35:30], a 4-bit extension (EXT) field **614** at bit locations [29:26], a RU1-only (R1) bit **616** at bit location [25], a 3-bit operation/data size (DSz) field **618** at bit locations [24:22], a 5-bit destination (DEST) general register field **620 at** bit locations [21:17] and a 5-bit source 1 (SRC1) general register field **622** at bit locations [16:12]. The RegOp field **610** also includes a single-bit set status (SS) field **624** at bit location [9], a single-bit immediate source 2 (I) field **626** at bit location [8] and an 8-bit immediate data or general register for source 2 operands (IMM8/SRC2) field **628** at bit locations [7:0]. The TYPE field **612** of RegOp encodings include, as follows:

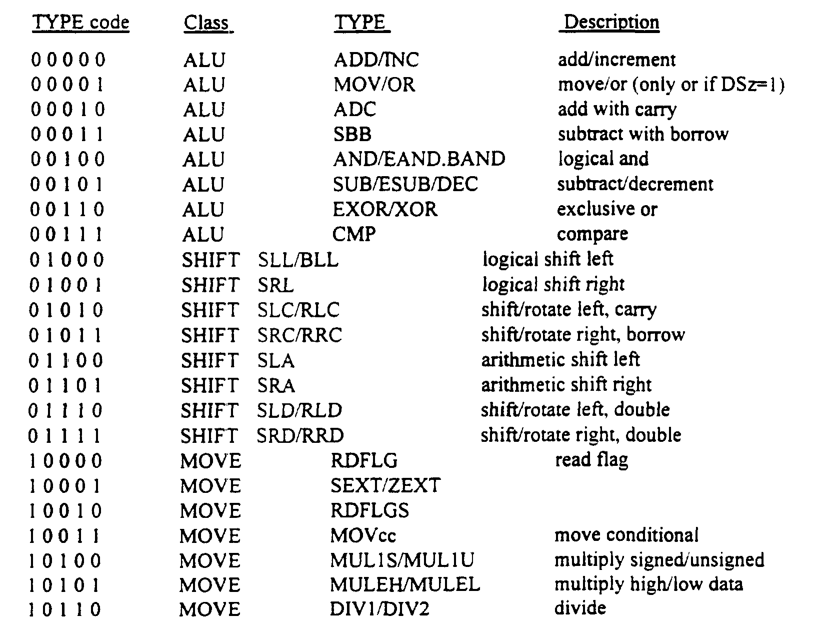

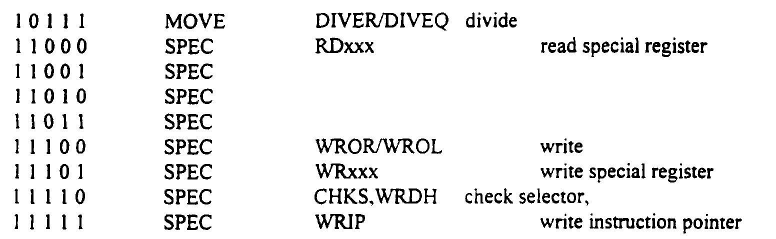

Several RegOp encodings, specifically xx01x encodings, specify condition code dependence. The rotate and shift shift Ops are functionally equivalent except that different statmod bits are asserted.

The extension field (EXT) **614** is used, in combination with bit<0> of the TYPE field **612,** for MOVcc operations to specify a 5-bit condition code. The extension field (EXT) **614** is also used for RDxxx/WRxxx operations to specify a 4-bit special register number. The set status (SS) field **624,** in combination with the EXT field **614,** is used to designate the status flags that are affected by an operation. For Ops in which the set status (SS) field **624** is set to 1, indicating that this Op does modify flags, the extension field (EXT) **614** specifies four status modification bits designating the groups of flags that are modified by the Op. For RDSEG Ops, the EXT field **614** specifies a 4-bit segment (selector) register. For a WRFLG conditional Op, the special register encoding matches the desired StatMod value for when the SS field is set. The set status (SS) field **624** and the EXT field **614** are RegOp fields.

Condition codes are encoded in five bits, bit<0> of the 5-bit condition code field specifies whether the condition or its complement is to be tested for truth or assertion, for example if cc<0> is equal to one then invert the condition. Bits <4:1> of the five-bit condition code (CC) field specify the condition to be evaluated, as follows:

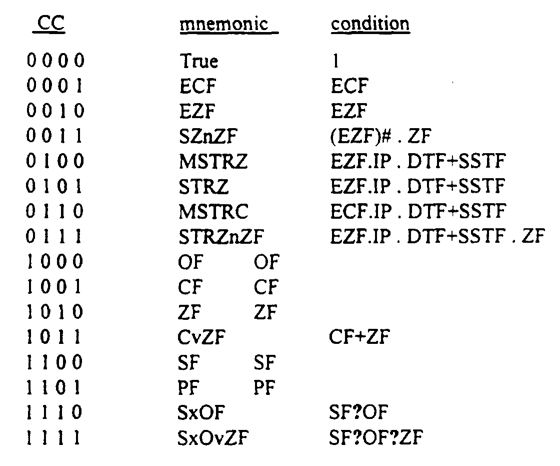

The EXT field **614** is used to update condition flags including six flags correspondingto x86 flags and two emulation flags. The eight flags are divided into four groups, using one status modification bit per group of flags. The EXT field **614** defines updating of the various condition code flags substantially independent of the TYPE **612** specification, so that functionally related flags are controlled and updated as a group. Updating of related flags as a group advantageously conserves control logic. The EXT field **614** defines a set of bits which determine the flags to be updated for a particular instruction. Decoupling of condition code handling from operation type, using the independent TYPE **612** and set status (SS) field **624,** allows some operations to be defined which do not update the flags. Accordingly, for those circumstances in which updating of condition flags is not necessary, it is highly advantageous to disable flag updating to avoid unnecessary dependency on previous flag values.

The RU1-only field **616** is indicative of Ops that are issued to the first register unit **244** and not to the second register unit **246** so that the R1 field **616** is a bit for hard-encoding an execution unit specification. Thus, the RU1-only field **616** indicates that a particular operation is only executable on a specific execution unit, generally because only the specific execution unit incorporates a function implemented on that unit. The set status (SS) field **624** modifies status flags according to EXT field **614** settings. The I field **626** specifies whether the source 2 operand is immediate or a general register. The IMM8/SRC2 field **628** specifies a 5-bit general register if the I field **626** is zero. The IMM8/SRC2 field **628** specifies a signed immediate value which is extended to the size of operation specified by the DSz field size if the I field **626** is one.

In the case of register operation (RegOp) substitution, the operation (Op) from the Op quad is a register operation (RegOp). The instruction register **512** holds instruction bytes that are decoded by the vectoring decoder **418.** During a vectoring instruction decode, the vectoring decoder **418** generates an initial vectoring quad and an entry point address based on the contents of the instruction register **512**. At the same time, the vectoring decoder **418** initializes the emulation environment variables, also called the emulation environment register **516**, from various information based on fields of the instruction register **512** and based on other information. Information from the emulation environment register **516** is supplied to Op substitution logic that performs the substitution operation.

For RegOp substitution, various substitutions are made into fields of the RegOp format **610** shown in **Figure 6A.** For the destination (DEST) **620** and source 1 (SRC1) **622** fields of a RegOp operation, a five-bit register encoding specifies a register using direct register specifiers (0-15) or indirect register specifiers (Reg and RegM). The direct register specifiers directly designate one of sixteen registers. The indirect specifiers, Reg and RegM, are substituted at Op decode time by the current register numbers (0-15) from the emulation environment registers **516.** Substitution takes places as the instruction decoder **230** decodesan instruction, vectors to an emulation code sequence in emulation code ROM **232,** initializesthe emulation environment register **516** with various fields from the instruction and other information. During operation of an emulation code sequence, the Ops in the sequence include various fields, such as indirect register specifier fields and size data fields, which are substituted based on current values of the emulation environment register **516.** Op substitution logic determines whether the encodings for a field are indicative of a substituted field. An encoding for a field may indicate that other fields are substituted. For example, the coding of indirect specifiers Reg and RegM in the dest **620** and src1 **622** fields is indicative that the DSz field **618** is also substituted.

With respect to the DSz field **618,** the x86 instruction set instructions operate on **8** bit, 16 bit or 32 bit data, depending on the current default condition of the processor **120.** The DSz field **618** includes three bits which indicate a data size of one byte, two bytes or three bytes. For instructions specifying substitution of data size, indirect size specifiers designate an A size, D size or S size. A data size substitution is determined by a B-bit and a D-bit. The B-bit is specified by the current stack-segment register (SS). The D-bit is specified by the code-segment register (CS). For indirect size specifiers. S size is determined by the B-bit. The effective address (A) size and the effective data (D) size are determined by the D-bit, possibly overridden by address or data size overwrite prefixes, and held in the emulation environment register **516.** In general, the indirect specifiers of A size, D size, and S size are substituted or replaced by the absolute encoding for the bytes or four bytes. For example, if a D size is selected, the data size is resolved into two bytes or four bytes based on the effective data size as specified by a bit in the emulation environment register **516**. Similarly, if an indirect size specifier encodes the A size, the effective address size is specified by a bit in the emulation environment register **516** to be either two bytes or four bytes. If the indirect specifier selects the S size, a B-bit determines whether two byte or four bytes are substituted.

Substitution of the Imm8/Src2 field **628** is performed only if source 2 (src2) operand is an indirect register specifier, rather than an immediate value. Op substitution logic determines whether the encoding for the immediate (I) field **626** is indicative of a substitution in the Imm8/Src2 field **628** by accessing the I field bit **626** and, if an indirect register specifier is selected, substituting a five-bit general register designation into the imm8/src2 field **628** of the RegOp format **610.** For a register-storedsrc2 operand using the memory-indexedaddressing form, no substitution takes place and the imm8/src2 field **628** of the RegOp format **610** is loaded with an index value. The RegOp format **610** is a RISC-type three (two source and one destination) operand format including the src1 field **622,** the imm8/src2 field **628** and the dest field **620**. A standard x86 format is a two operand format. The I field **626** advantageouslyallows the source 2 operand to flexibly take the form of either an immediate value or a general register.

The RegOp field **610** defines a group of specific Ops, including signed multiply (MUL IS), unsigned multiply (MUL1U), multiply high data (MULEH) and multiply low data (MULEL) Ops, that execute parts of multiplicationand unloading operations so that a multiply instruction is made up of a plurality of these specific multiplication Ops. A division operation is similarly executed by combination of a plurality of specific simple division Ops, including one and two bit divide (DIV1), step divide(DIV2), divide unload remainder (DIVER) and divide unload quotient (DIVEQ) Ops, for example performing a two-bit iteration on a divide.

The WRIP Op writes the x86 program counter (PC) to change the execution address when the WRIP Op is retired, restarting instruction fetching at a desired address. The WRIP Op is particularly advantageous in the case of various instructions for which decoding of the instruction length is difficult or impossible so that, to avoid logic complexity, the implemented logic does not correctly decode the length. The instruction is also advantageous for serializing instruction fetch operations and for emulating branches. Efficiency is achieved by allowing the logic to incorrectly decode the instruction length and to set the program counter using the WRIP Op so that the incorrectly decode instruction length is ignored.

The check selector (CHKS)Op is used for handling x86 instruction set segment descriptors and selectors. The CHKS Op initiates a process of loading a segment register, including the operations of checking for a null selector and generating an address offset into a descriptor table.

Figure 6B is a load-store operation (LdStOp) field encoding graphic that illustrates various fields in the LdStOp format. In the LdStOp field **630,** most-significantbits 36 and 37 are respectively set to one and zero to designate the operation as a LdStOp. The LdStOp field **630** also includes a 4-bit operation type (TYPE) field **632** at bit locations [35:32], and a two-bit index scale factor (ISF) field **634** at bit locations [31:30] designating factors 1x, 2x, 4x and 8. The LdStOp field **630** includes a 4-bit segment register (SEG) field **636** at bit locations [29:26] and a two-bit address calculation size (ASz) field **638** at bit locations [25:24] designating a selection between A size, S size, D size and four bytes. The effective data and address sizes are substituted for LdStOps in the same manner as RegOp substitution. The LdStOp field **630** includes a 2-bit data size (DSz) field **640** at bit locations [23:22] specifying sizes (1, 2,4 and DSize bytes) for integers and sizes (2,4 and 8 bytes) for floating point, a 5-bit data source/destination(DATA) general register field **642** at bit locations [21:17] and a single-bit large displacement(LD) bit **644** at bit location [16] specifying a large displacement using the Disp8 displacement from a preceding Op. The LD bit **644** is useful since Ops are only **38** bits wide. an instruction format insufficientto specify a full 32-bit displacement into an operation. Only displacements encoded in eight bits are possible for a single LdStOp field **630.** The LD bit **644,** when asserted, indicates that the immediately preceding Op supplies a full 32-bit displacement. The LdStOp field **630** includes a 4-bit base (BASE) general register field **646** at bit locations [15:12]. The LdStOp field **630** also includes an 8-bit signed displacement(DISP8) field **648** at bit locations [11:4] and a 4-bit index (INDEX) general register **649** at bit locations [3:0]. The TYPE field **632** of LdStOp encodings include, as follows:

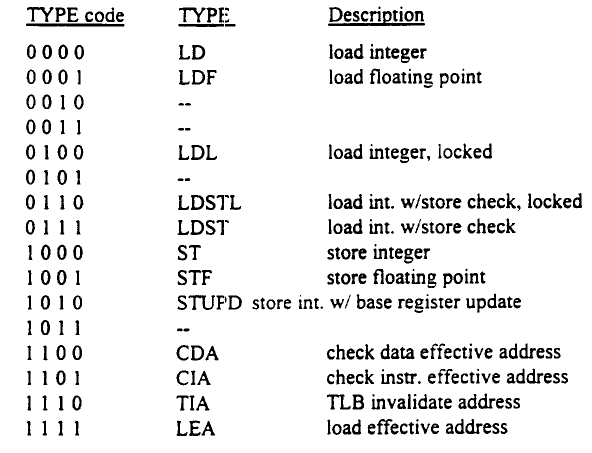

In the case of load-store operation (LdStOp) substitution, the emulation code sequencer 510 first determines whether a LOCK prefix has been acknowledged during setup of the emulation environment. If the designated LdStOp operation is a load integer with store check (LDST) and the LOCK prefix is acknowledged, the emulation code sequencer 510 substitutesa load integer with store check, locked (LDSTL) opcode for the LDST opcode.

For LdStOp substitution, various substitutionsare made into fields of the LdStOp format **630** shown in **Figure 6B.** For the data register (DataReg) field **642** of a LdStOp operation, a five-bit register encoding specifies a register using direct register specifiers (0-15) or indirect register specifiers (Reg and RegM). The direct register specifiers directly designate one of sixteen registers. The indirect specifiers. Reg and RegM, are substituted at Op decode time by the current register numbers (0-15) from the emulation environment registers **516.** Substitution takes places as the instruction decoder **230** decode an instruction, vectors to an emulation code sequence in emulation code ROM **232,** initialize the emulation environment register **516** with various fields from the instruction and other information. During operation of an emulation code sequence, the Ops in the sequence include various fields, such as indirect register specifier fields and size data fields, which are substituted based on current values of the emulation environment register **516**. Op substitution logic determines whether the encodings for a field are indicative of a substituted field. An encoding for a field may indicate that other fields are substituted. The particular substitution depends on whether the data register (DataReg) **642** is addressed using register addressing or memory-indexedaddressing. If the register addressing form is designated. DataReg field **642** of the LdStOp format **630** is determined by indirect specifier Reg. If memory-indexedaddressing is designated. DataReg field **642** of the LdStOp format **630** is determined by indirect specifier RegM.

With respect to the ASz field **638** and the DSz field **640**, the x86 instruction set instructions operate on **8** bit, 16 bit or 32 bit data, depending on the current default condition of the processor **120**. The ASz field **638** and DSz field **640** each include two bits which indicate a data size of one byte, two bytes or three bytes. For instructions specifying substitution of data size, indirect size specifiers designate an A size, D size or S size. A data size substitution is determined by a B-bit and a D-bit. The B-bit is specified by the current stack-segment register (SS). The D-bit is specified by the code-segment register (CS). For indirect size specifiers, S size is determined by the B-bit. The effective address (A) size and the effective data (D) size are determined by the D-bit, possibly overridden by address or data size overwrite prefixes, and held in the emulation environment register **516.** In general, the indirect specifiers of A size, D size, and S size are substituted or replaced by the absolute encoding for the bytes or four bytes. For example, if a D size is selected, the data size is resolved into two bytes or four bytes based on the effective data size as specified by a bit in the emulation environment register **516.** Similarly, if an indirect size specifier encodes the A size, the effective address size is specified by a bit in the emulation environment register **516** to be either two bytes or four bytes. If the indirect specifier selects the S size, a B-bit determines whether a two byte or four bytes are substituted.

The LdStOp operation is checked to determine whether a four-bit segment register field 636 is to be substituted. When the emulation environment is set up, segment override prefixes are monitored. Segment override prefixes affect the decode of a subsequent instruction when the generation of a LdStOp is dependent on the effective operand segment of the instruction. The default segment is DS or SS, depending on the associated general address mode, and is replaced by the segment specified by the last segment override prefix. The segment register address space is expanded from conventionalx86 specification to four bits to allow additional special segment registers to be support. The segment register is encoded as follows:

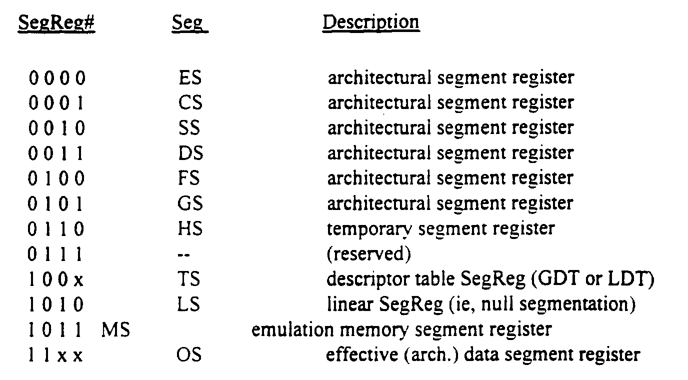

At Op decode time, the emulation code sequencer **510** replaces the "OS" segment registerwith the current three bit segment register number from the emulation environment. Thus, a segment register is alternatively hardcoded in a specific segment register, or set to segment OS. which designates the current effective data segment register but which can be overridden with a segment override.

The emulation memory segment register(MS) designates access of a special emulation memory for usage in the emulation environment. The descriptor table SegReg TS designates access of either the global descriptortable (GDT) or the local descriptortable (LDT).

**Figure 6C** is a load immediate operation (LIMMOp) field encoding graphic that illustrates various fields in the LIMMOp format. In the LIMMOp field **650,** most-significantbits 36 and 37 are both set to one to designate the operation as a LIMMOp. The LIMMOp field **650** also includes a 16-bit immediate high part (ImmHi) **652** at bit locations [35:20], a 5-bit destination (DEST) general register field **654** at bit locations [19:16] and a 16-bit immediate low part (ImmLo) **656** at bit locations [15:0]. ImmHi **652** and ImmLo **656** combine to specify a 32-bit value that is loaded into the register specified by the DEST field **654.**

**Figure 6D** is a special operation (SpecOp) field encoding graphic that illustrates various fields in the SpecOp format. In the SpecOp field **660.** most-significantbits 35 to 37 are respectively set to 101 to designate the operation as a SpecOp. The SpecOp field **660** also includes a 4-bit operation type (TYPE) field **662** at bit locations [34:31], a 5-bit condition code (CC) field **664** at bit locations [30:26] and a two-bit data size (DSz) field **666** at bit locations[23:22] designating sizes of 1. 4 and DSize bytes. The SpecOp field **660** includes a 5-bit destination general register(DEST) field **668** at bit locations [21:17] and a 17-bit immediate constant (Imm17) field **670** at bit locations [16:0]. The Imm17 field **670** holds either a 17-bit signed immediate value or a 14-bit Op address. The CC field **664** is only used by BRCOND Ops. The DSz field **666** and DEST field **668** are used only by LDKxx Ops. A standard NOP Op is defined to be "LIMM +0,<undefined>. The TYPE field **662** of SpecOp encodings include, as follows:

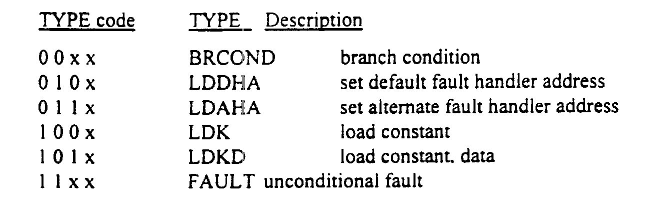

In the case of special operation (SpecOp) substitution, the SpecOp is checked to determine whether a destination general register (DestReg) is addressed using register addressing or memory-indexedaddressing. If the register addressing form is designated, the emulation code sequencer **510,** up-substitutesa previously stored modr/m reg field from Reg register into the DestReg field **668** of the SpecOp format **660** shown in **Figure 6D.** If the memory-indexed addressing form is designated. the emulation code sequencer **510,** up-substitutes a previously stored modr/m regm field from Regm register into the DestReg field **668** of the SpecOp format.

The SpecOp is also checked to determine whether the data size (DSz) field **666** is to be substituted. A substitution value for the DSz field is determined previous to Op handling by the emulation code sequencer **510** when the emulation environment is defined in accordance with current segment default information as overridden by any operand size overrides. The DSz field **666** is set to a size of 1 byte, 4 bytes or an alternative defined D size. The emulation code sequencer **510** substitutesa a designated substitution value into the DSz field **666** of the SpecOp format **660**.

If a SpecOp is a load constant, data (LDKD) operation, the emulation code sequencer **510** adjusts or scales data in the 17-bit immediate (Imm 17) field **670** based on the current effective data size, which is specified by the data size (DSz) field **666.**

### Register Address Space and Emulation Interface

The processor **120** implements a register address space that is expanded in comparison to a conventional x86 register address space. The processor **120** register address space is addressed by five bits so that 2⁵, or 32, registers may be defined. Eight registers correspond to x86 architectural registers. Sixteen additional temporary registers are added. The data size (DSz) field either directly or indirectly specifies the data size of the operation. For a single-byte operation, a register designated by the register encoding field is different from a two or four byte register designated by the same register encoding field. The data size of an operation may be either one-byte (1^{B}) or two/four bytes (2^{B}/4^{B}) for RegOps, SpecOps and the data field **642** of LdStOps. The data size is always two/four bytes (2^{B}/4^{B}) for the base **646** and index **649** fields of the LdStOps.

The processor **120** register field encoding is, as follows:

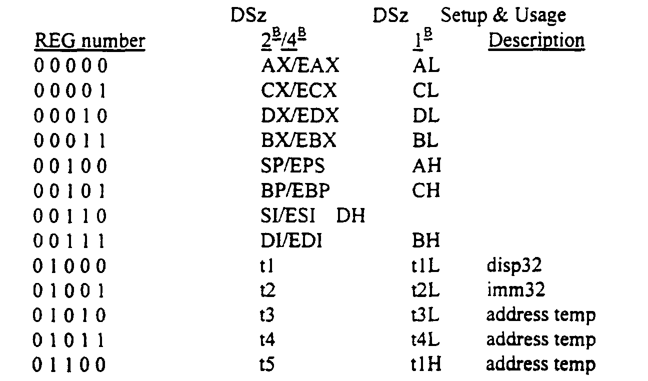

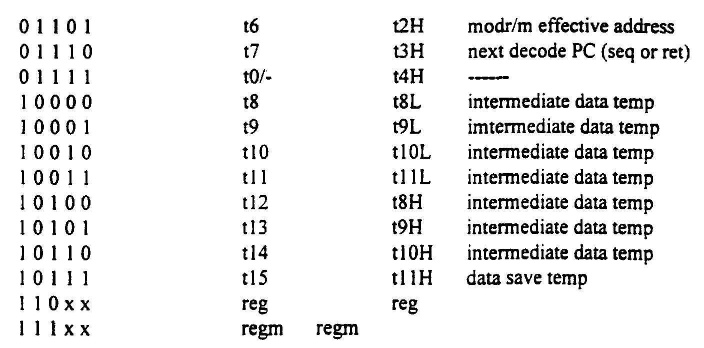

The intermediate data temporary registers are used, beginning with t8 in order of value derivation or little-endian significance. The "reg" and "regm" register numbers are replaced at Op decode time by the current three bit register number from the emulation environment, specifically by substituting Reg/RegM with "00xxx". The three-bits designate a register from among the first eight registers (AX through DI).

The organization of the Op formats and the expanded register address space define a flexible internal microarchitectural state of the processor **120.** The x86 architectural state is merely a subset of the processor **120** microarchitectural state. The expanded register address space includes an expanded number of temporary registers, as compared to the x86 register address space. Twenty-four registers are supplied by the expanded register address space of the processor **120**, only eight of these registers correspond to the x86 architectural registers and sixteen additional temporary registers are supplied. Similarly, the processor **120** includes an expanded number of flag registers, only some of which correspond to the x86 status flags.

For example, in one processor **120** embodiment, an emulation carry flag is defined in addition to the conventional carry flag and associated with the emulation environment. Thus, a conventional add instruction is defined that sets the carry flag and changes the permanent architectural state of the processor **120.** An emulation add operation is defined that sets the emulation carry flag and not the conventional carry flag. Various instructions are defined to branch on the basis of the emulation carry flag while other instructions branch on the basis of the conventional carry flag. Thus, the processor **120** is concurrently operational in both a conventional microarchitectural state and in an emulation microarchitectural state. This operation in an emulation environment allows the processor **120** to execute an emulation microsequence and to not change the visible microarchitectural state.

Referring to **Figure 8,** the substitution technique is illustrated by a specific example. An ADD register instruction in the x86 instruction set is encoded as an opcode followed by a modr/m byte. The 8-bit opcode field of the ADD instruction, in combination with specification in the modr/m byte that the instruction is a register instruction. are used to derive a particular ROM entry point that causes the emulation code ROM **232** to produce an Op for an ADD RegM to Reg operation. The reg and regm fields in the instruction register **512** specify that reg becomes AX and regm becomes BX. respectively. The reg and regm fields are applied from the instruction register **512** to the Op substitution circuit **522** so that substitution is achieved. The emulation code ROM **232** includes Op templates for only a limited number of Ops and the Op substitution circuit **522** fills the templates variously to generate a large number of different Ops.

Referring to the listed processor **120** register field encodings, register AX is hard-specified by a reg code, 0 0 0 0 0. Alternatively, four possible reg encodings, 1 1 0 x x. specify substitution of a register. The substitution is made based on the particular instruction emulated and the current state of the processor **120** including the current emulation environment. Generally, a substitution and execution of an operation is performed by substituting: (1) an encoding for a Reg into the dest field **620,** (2) an encoding for a register Reg into the src1 field **622,** (3) an encoding for a RegM into the Imm8/Src2 field **628,** (4) a zero into the immediate (I) field **626,** and (5) either the one, two or four bytes designated by the data size into the DSz field **618.**

### SYSTEM DISCLOSURE TEXT

A wide variety of computer system configurations are envisioned, each embodying an instruction decoder including emulation using indirect specifiers in accordance with the present invention. For example, such a computer system (e.g., computer system 1000) includes a processor **120** providing an instruction decoder including emulation using indirect specifiers in accordance with the present invention, a memory subsystem (e.g., RAM **1020**), a display adapter **1010,** disk controller/adapter **1030**, various input/output interfaces and adapters (e.g., parallel interface **1009**, serial interface **1008**, LAN adapter **1007**, etc.), and corresponding external devices (e.g., display device **1001,** printer **1002,** modem **1003,** keyboard **1006,** and data storage). Data storage includes such devices as hard disk **1032,** floppy disk **1031,** a tape unit, a CD-ROM, a jukebox, a redundant array of inexpensive disks (RAID), a flash memory, etc.

While the invention has been described with reference to various embodiments, it will be understood that these embodiments are illustrative and that the scope of the invention is not limited to them. Many variations. modifications, additions, and improvements of the embodiments described are possible. Additionally, structures and functionality presented as hardware in the exemplary embodiment may be implemented as software, firmware, or microcode in alternative embodiments. For example, the description depicts a macroinstruction decoder having short decode pathways including three rotators **430, 432** and **434,** three instruction registers **450. 452** and **454** and three short decoders SDec0 **410,** SDecl **412** and SDec2 **414.** In other embodiments, different numbers of short accoder pathways are employed, A decoder that employs two decoding pathways is highly suitable. These and other variations, modifications, additions. and improvements may fall within the scope of the invention as defined in the claims which follow.

## Claims

1. An instruction decoder emulation circuit (231) for a processor (120) comprising:
an instruction register (512) for holding an instruction code, the instruction register having a plurality of encoded bit fields within the instruction code:
an entry point circuit (514) coupled to the instruction register to receive the instruction code, the entry point circuit for deriving an entry point from the instruction code;
an emulation code sequencer (510) coupled to the entry point circuit to receive the derived entry point, the emulation code sequencer (510) for generating control signals that control a sequence of operations (Ops); and
an emulation code memory (520) coupled to the emulation code sequencer (510) for receiving the control signals, the emulation code memory (520) storing a plurality of Op sequences and sequence control codes, the emulation code memory (520) having a first output terminal for generating Op sequences and a second output terminal for generating sequence control codes, the sequence control code output terminal being coupled to the emulation code sequencer (510); characterised by:
an operation (Op) substitution circuit (522) coupled to the emulation code memory (520) first output terminal to receive an Op sequence and coupled to the instruction register (512) to receive selected encoded bit fields of the instruction code, the Op substitution circuit (522) for substituting selected fields of the instruction code bit fields into the Op sequence, the Op substitution circuit (522) controlling the substitution according to direct specifiers and indirect specifiers which are designated by bit fields of the instruction.

2. An instruction decoder emulation circuit as claimed in claim 1, wherein the instruction register (512) includes a plurality of fields with a field being set from a combination of a current instruction and a current state of the processor (120) including an emulation environment.

3. An instruction decoder emulation circuit as claimed in claim 1, wherein the emulation environment loads a modr/m reg field into a Reg register and a modr/m regm field into a Regm register and the Op substitution circuit (522) substitutes the Reg and RegM registers into selected fields of the instruction code bit fields of the Op sequence so that the emulation code memory (520) includes a single ROM entry point for generating Ops operating upon a plurality of different register specifications.

4. An instruction decoder emulation circuit as claimed in claim 1. wherein the emulation environment loads a data size specification and the Op substitution circuit (522) substitutes the data size specification into a data size field of the instruction code bit fields of the Op sequence so that the emulation code memory (520) includes a single ROM entry point for generating Ops operating upon a plurality of different data sizes.

5. An instruction decoder emulation circuit as claimed in claim 1, wherein the emulation environment loads a memory segment descriptor and the Op substitution circuit (522) substitutes the memory segment descriptor into a segment descriptor field of the instruction code bit fields of the Op sequence so that the emulation code memory (520) includes a single ROM entry point for generating Ops operating in a plurality of different memory segments.

6. An instruction decoder emulation circuit as claimed in claim 1, wherein the emulation environment loads an address size specification and the Op substitution circuit (522) substitutes the address size specification into an ASz field.

7. An instruction decoder emulation circuit as claimed in claim 1, wherein the emulation environment loads a data size specification and the Op substitution circuit (522) substitutes the data size specification into an DSz field.

8. A method of operating an instruction decoder emulation circuit (231) in a processor (120) comprising the steps of:
receiving an instruction code into an instruction register (512), the instruction register having a plurality of encoded bit fields within the instruction code;
selectively updating various ones of the plurality of encoded bit fields in accordance with a processor state:
deriving an entry point from the instruction code;
addressing an emulation code memory (520) according to the derived entry point, the emulation code memory storing a plurality of Op sequences:
outputting an addressed operation from the emulation code memory (520);
substituting selected encoded bit fields of the instruction code into the addressed operation; and,
controlling the substitution according to direct specifiers and indirect specifiers, which are designated by bit fields of the instruction.

9. A method of operating an instruction decoder emulation circuit in a processor as claimed in claim 8, comprising the steps of:
recelving an instruction code into an instruction register (512), the instruction register having a plurality of encoded bit fields within the instruction code;
selectively updating various ones of the plurality of encoded bit fields in accordance with a processor state;
deriving an entry point from the instruction code;
receiving the derived entry point and generating control signals for controling a sequence of operations (Ops);
addressing an emulation code memory (520) according to the derived entry point, the emulation code memory storing a plurality of Op sequences;
outputting Op sequences from the emulation code memory;
receiving and outputting said sequence control codes from the emulation code memory;
receiving an Op sequence from the emulation code memory and substituting selected encoded bit fields of the instruction code received from the instruction register into the addressed operation; and
controlling the substitution according to direct specifiers and indirect specifiers which are designated by bit fields of the instruction.

10. An instruction decoder (220) for a superscalar processor, comprising:
a plurality of first type macroinstruction decoders (410,412,414) for simultaneously decoding a plurality of instructions in a predetermined group of first type instructions; and
an instruction decoder emulation circuit (231) as claimed in claim 1.

11. An instruction decoder for a superscalar processor as claimed in claim 10, said instruction decoder for converting CISC-type instructions to RISC-type operations, said plurality of first type macroinstruction decoders for simultaneously decoding a plurality of CISC-type instructions in a predetermined group of first CISC-type instructions; wherein
said instruction code, decoded by said emulation ROM decoder, is a second CISC-type instruction code.

12. A computer system comprising:
a memory subsystem for storing data and instructions; and
a processor operably coupled to access the data and instructions stored in the memory subsystem, wherein the processor includes an instruction decoder (220) as claimed in claim 10.

13. A decoder for a processor, wherein the decoder includes an instruction decoder emulation circuit (231) as claimed in claim 1.

## Patentansprüche

1. Instruktionsdekodier-Emulationsschaltung (231) für einen Prozessor (120), mit:
einem Instruktionsregister (512) zum Halten eines Instruktionscodes, wobei das Instruktionsregister mehrere Felder für kodierte Bits innerhalb des Instruktionscodes aufweist;
einer zwecks Empfangs des Instruktionscodes mit dem Instruktionsregister verbundenen Eintrittspunktschaltung (514) zum Ableiten eines Eintrittspunkts aus dem Instruktionscode;
einem zwecks Empfangs des abgeleiteten Eintrittspunkts mit der Eintrittspunkschaltung verbundenen Emuiationscode-Sequenzierer (510) zum Erzeugen von Steuersignalen, die eine Sequenz von Operationen (Ops) steuern; und
einem zwecks Empfangs der Steuersignale mit dem Emulationscode-Sequenzierer (510) verbundenen Emulationscodespeicher (520), der mehrere Op-Sequenzen und Sequenzsteuercodes speichert, wobei der Emulationscodespeicher (520) einen ersten Ausgangsanschluss zum Erzeugen von Op-Sequenzen und einen zweiten Ausgangsanschluss zum Erzeugen von Sequenzsteuercodes aufweist, und wobei der Sequenzsteuercode-Ausgangsanschluss mit dem Emuiationscode-Sequenzierer (510) verbunden ist;
gekennzeichnet durch:
einer Operations-(Op-)Substitutionsschaltung (522), die zwecks Empfangs einer Op-Sequenz mit dem ersten Ausgangsanschluss des Emulationscodespeichers (520) verbunden und zwecks Empfangs gewählter Instruktionscode-Felder für kodierte Bits mit dem Instruktionsregister (512) verbunden ist, wobei die Op-Substitutlonsschaltung (522) zum Substituieren gewählter Felder der Instruktionscode-Bitfelder in der Op-Sequenz vorgesehen ist und die Substitution gemäß direkten Spezifikatoren und indirekten Spezifikatoren steuert, die durch Bit-Felder der Instruktion bezeichnet sind.

2. Instruktionsdekodier-Emulationsschaltung nach Anspruch 1, bei der das Instruktionsregister (512) mehrere Felder aufweist, wobei ein Feld basierend auf einer Kombination aus einer aktuellen Instruktion und einem aktuellen Zustand des Prozessors (120) einschließlich einer Emulationsumgebung gesetzt wird.

3. Instruktionsdekodier-Emulationsschaltung nach Anspruch 1, bei der die Emulationsumgebung ein modr/m reg-Feld in ein Reg-Register und ein modr/m regm-Feld in ein Regm-Register lädt und die Op-Substitutionsschaltung (522) die Reg- und RegM-Register in gewählten Feldern der Instruktionscode-Bitfelder der Op-Sequenz lädt, derart, dass der Emulationscodespeicher (520) einen einzelnen ROM-Eintrittspunkt zum Erzeugen von Ops aufweist, die entsprechend mehrerer unterschiedlicher Register-Spezifikationen arbeiten.

4. Instruktionsdekodier-Emulationsschaltung nach Anspruch 1, bei der die Emulationsumgebung eine Datengröße-Spezifikation lädt und die Op-Substitutionsschaltung (522) die Datengröße-Spezifikation in ein Datengröße-Feld der Instruktionscode-Bitfelder der Op-Sequenz lädt, derart, dass der Emulationscodespeicher (520) einen einzelnen ROM-Eintrittspunkt zum Erzeugen von Ops aufweist, die entsprechend mehrerer unterschiedlicher Register-Größen arbeiten.

5. Instruktionsdekodier-Emulationsschaltung nach Anspruch 1, bei der die Emulationsumgebung einen Speichersegment-Deskriptor lädt und die Op-Substitutionsschaltung (522) den Speichersegment-Deskriptor in ein Segmentdeskriptor-Feld der Instruktionscode-Bitfelder der Op-Sequenz lädt, derart, dass der Emulationscodespeicher (520) einen einzelnen ROM-Eintrittspunkt zum Erzeugen von Ops aufweist, die in mehreren unterschiedlichen Speichersegmenten arbeiten.

6. Instruktionsdekodier-Emulatlonsschaltung nach Anspruch 1, bei der die Emulationsumgebung eine Adressgröße-Spezifikation lädt und die Op-Substitutionsschaltung (522) die Adressgröße-Spezifikation in einem ASz-Feld substituiert.

7. Instruktionsdekodier-Emulatlonsschaltung nach Anspruch 1, bei der die Emulationsumgebung eine Datengröße-Spezifikation lädt und die Op-Substitutionsschaltung (522) die Datengröße-Spezifikation in einem DSz-Feld substituiert.

8. Verfahren zum Betätigen einer Instruktionsdekodier-Emulationsschaltung (231) in einem Prozessor (120), mit den folgenden Schritten:
Eingeben eines Instruktionscodes in ein Instruktionsregister (512), das mehrere Felder für kodierte Bits innerhalb des Instruktionscodes aufweist;
selektives Aktualisieren verschiedener der mehreren Felder für kodierte Bits entsprechend dem Prozessor-Zustand;
Ableiten eines Eintrittspunkts aus dem Instruktionscode;
Adressieren eines Emulationscodespeichers (520) entsprechend dem abgeleiteten Eintrittspunkt, wobei der Emulationscodespeicher mehrere Op-Sequenzen speichert;
Ausgeben einer adressierten Operation aus dem Emulationscodespeicher (520);
Substituieren gewählter Felder für kodierte Bits des Instruktionscodes in der adressierten Operation; und
Steuern der Substitution entsprechend den direkten Spezifikatoren und den indirekten Spezifikatoren, die durch das Bit-Feld der Instruktion bezeichnet sind.

9. Verfahren zum Betätigen einer Instruktionsdekodier-Emulationsschaltung in einem Prozessor, gemäß Fig. 8, mit den folgenden Schritten:
Eingeben eines Instruktionscodes in ein Instruktionsregister (512), das mehrere Felder für kodierte Bits innerhalb des Instruktionscodes aufweist;
selektives Aktualisieren verschiedener der mehreren Felder für kodierte Bits entsprechend dem Prozessor-Zustand;
Ableiten eines Eintrittspunkts aus dem Instruktionscode;
Empfangen des abgeleiteten Eintrittspunkts und Erzeugen von Steuersignalen zum Steuern einer Sequenz von Operationen (Ops);
Adressieren eines Emulationscodespeichers (520) entsprechend dem abgeleiteten Eintrittspunkt, wobei der Emulationscodespeicher mehrere Op-Sequenzen speichert;
Ausgeben von Op-Sequenzen aus dem Emulationscodespeicher;
Empfangen und Ausgeben der Sequenzsteuercodes aus dem Emulationscodespeicher;
Empfangen einer Op-Sequenz aus dem Emulationscodespeicher und Substituieren gewählter Felder für kodierte Bits des aus dem Instruktionsregister empfangenen Instruktionscodes in der adressierten Operation; und
Steuern der Substitution entsprechend den direkten Spezifikatoren und den indirekten Spezifikatoren, die durch Bit-Felder der Instruktion bezeichnet sind.

10. Instruktions-Decoder (220) für einen Superskalar-Prozessor, mit:
mehreren Makroinstruktions-Decodern (410,412,414) eines ersten Typs zum gleichzeitigen Dekodieren mehrerer Instruktionen in einer vorbestimmten Gruppe von Instruktionen eines ersten Typs; und
einer Instruktionsdekodier-Emuiationsschaltung (231) gemäß Anspruch 1.

11. Instruktions-Decoder für einen Superskalar-Prozessor nach Anspruch 10, wobei der Instruktions-Decoder zum Konvertieren von CISC-Typ-Instruktionen zu RISC-Typ-Operationen vorgesehen ist, und wobei die mehreren Makroinstruktions-Decoder des ersten Typs zum gleichzeitigen Dekodieren mehrerer CISC-Typ-Instruktionen in einer vorbestimmten Gruppe erster RISC-Typ-Instruktionen vorgesehen sind; wobei der durch den Emulations-ROM-Decoder dekodierte Instruktionscode ein zweiter CISC-Typ-Instruktonscode ist.

12. Computersystem mit:
einem Speicher-Untersystem zum Speichern von Daten und Instruktionen; und
einem betriebsmäßig zum Zugreifen auf die in dem Speicher-Untersystem gespeicherten Daten und Instruktionen geschalteten Prozessor, der einen Instruktions-Decoder (220) gemäß Anspruch 10 enthält.

13. Decoder für einen Prozessor, mit einer Instruktionsdekodier-Emulationsschaltung (231) gemäß Anspruch 1.

## Revendications

1. Circuit d'émulation de décodeur d'instructions (231) destiné à un processeur (120), comprenant :
un registre d'instruction (512) pour conserver un code d'instructions, le registre d'instruction comportant une pluralité de champs binaires codés à l'intérieur du code d'instructions ;
un circuit de point d'entrée (514) couplé au registre d'instruction pour recevoir le code d'instructions, le circuit de point d'entrée servant à déduire un point d'entrée à partir du code d'instructions;
un séquenceur de code d'émulation (510) couplé au circuit de point d'entrée pour recevoir le point d'entrée déduit, le séquenceur de code d'émulation (510) servant à générer des signaux de commande qui commandent une séquence d'opérations (Op) ; et
une mémoire de code d'émulation (520) couplée au séquenceur de code d'émulation (510) pour recevoir les signaux de commande, la mémoire de code d'émulation (520) stockant une pluralité de séquences Op et des codes de commande de séquence, la mémoire de code d'émulation (520) comportant une première borne de sortie pour générer des séquences Op et une seconde borne de sortie pour générer des codes de commande de séquence, la borne de sortie de code de commande de séquence étant couplée au séquenceur de code d'émulation (510) ; caractérisé par :
un circuit de substitution d'opération (Op) (522) couplé à la première borne de sortie de la mémoire de code d'émulation (520) pour recevoir une séquence Op et couplé au registre d'instructions (512) pour recevoir des champs binaires codés sélectionnés du code d'instruction, le circuit de substitution d'Op (522) servant à substituer des champs sélectionnés des champs binaires de code d'instructions dans la séquence Op, le circuit de substitution Op (522) commandant la substitution suivant des spécificateurs directs et des spécificateurs indirects qui sont désignés par des champs binaires de l'instruction.

2. Circuit d'émulation de décodeur d'instruction selon la revendication 1, dans lequel le registre d'instructions (512) comprend une pluralité de champs, un champ étant établi à partir d'une combinaison d'une instruction en cours et d'un d'état courant du processeur (120) incluant un environnement d'émulation.

3. Circuit d'émulation de décodeur d'instruction selon la revendication 1, dans lequel l'environnement d'émulation charge un champ modr/m reg dans un registre Reg et un champ modr/m regm dans un registre Regm et le circuit de substitution d'Op (522) substitue les registres Reg et RegM dans des champs sélectionnés des champs binaires de code d'instruction de la séquence Op de sorte que la mémoire de code d'émulation (520) comprend un point d'entrée de ROM unique pour générer des opération Op agissant sur une pluralité de spécifications de registre différentes.

4. Circuit d'émulation de décodeur d'instruction selon la revendication 1, dans lequel l'environnement d'émulation charge une spécification de dimension de données et le circuit de substitution d'Op (522) substitue la spécification de dimension de données dans un champ de dimension de données des champs binaires de code d'instructions de la séquence Op de sorte que la mémoire de code d'émulation (520) comprend un point d'entrée de ROM unique pour générer les Op agissant sur une pluralité de dimensions de données différentes.

5. Circuit d'émulation de décodeur d'instruction selon la revendication 1, dans lequel l'environnement d'émulation charge un descripteur de segment de mémoire et le circuit de substitution d'Op (522) substitue le descripteur de segment de mémoire au champ de descripteur de segment des champs binaires de code d'instructions de la séquence d'Op de sorte que la mémoire de code d'émulation (520) comprend un point d'entrée de ROM unique pour générer des Op agissant dans une pluralité de segments de mémoire différents.

6. Circuit d'émulation de décodeur d'instruction selon la revendication 1, dans lequel l'environnement d'émulation charge une spécification de dimension d'adresse et le circuit de substitution d'Op (522) substitue la spécification de dimension d'adresse dans un champ ASz.

7. Circuit d'émulation de décodeur d'instruction selon la revendication 1, dans lequel l'environnement d'émulation charge une spécification de dimension de données et le circuit de substitution d'Op (522) substitue la spécification de grandeur de données dans un champ DSz.

8. Procédé de fonctionnement d'un circuit d'émulation de décodeur d'instruction (231) d'un processeur (120) comprenant les étapes consistant à :
recevoir un code d'instruction dans un registre d'instruction (512), le registre d'instruction comportant une pluralité de champs binaires codés à l'intérieur du code d'instructions ;
actualiser sélectivement différents champs de la pluralité de champs binaires codés en conformité avec un état du processeur ;
déduire un point d'entrée à partir du code d'instructions ;
adresser une mémoire de code d'émulation (520) selon le point d'entrée déduit, la mémoire de code d'émulation stockant une pluralité de séquences d'Op ;
délivrer une opération adressée à partir de la mémoire de code d'émulation (520) ;
substituer des champs binaires codés sélectionnés du code d'instruction dans l'opération adressée ; et
commander la substitution selon des spécificateurs directs et des spécificateurs indirects qui sont désignés par des champs binaires de l'instruction.

9. Procédé de fonctionnement d'un circuit d'émulation de décodeur d'instructions dans un processeur selon la revendication 8, comprenant les étapes consistant à :
recevoir un code d'instructions dans un registre d'instruction (512) , le registre d'instruction comportant une pluralité de champs binaires codés à l'intérieur du code d'instructions ;
actualiser sélectivement différents champs de la pluralité de champs binaires codés suivant un état du processeur ;
déduire un point d'entrée à partir du code d'instructions ;
recevoir le point d'entrée déduit et générer des signaux de commande pour commander une séquence d'opérations (Op) ;
adresser une mémoire de code d'émulation (520) suivant le point d'entrée déduit, la mémoire de code d'émulation stockant une pluralité de séquences d'Op ;
délivrer des séquences d'Op venant de la mémoire de code d'émulation ;
recevoir et délivrer lesdits codes de commande de séquence venant de la mémoire de code d'émulation ;
recevoir une séquence d'Op venant de la mémoire de code d'émulation et substituer des champs binaires codés sélectionnés du code d'instructions reçus à partir du registre d'instruction dans l'opération adressée ; et
commander la substitution en conformité avec des spécificateurs directs et des spécificateurs indirects qui sont désignés par les champs binaires de l'instruction.

10. Décodeur d'instruction (220) destiné à un processeur superscalaire, comprenant :
une pluralité de décodeurs de macro-instructions du premier type (410, 412, 414) pour décoder simultanément une pluralité d'instructions dans un groupe prédéterminé d'instructions du premier type ; et
un circuit d'émulation de décodeur d'instructions (231) selon la revendication 1.

11. Décodeur d'instruction destiné à un processeur superscalaire selon la revendication 10, ledit décodeur d'instruction servant à convertir des instructions de type CISC en instructions de type RISC, ladite pluralité de décodeurs d'instructions du premier type servant à décoder simultanément une pluralité d'instructions de type CISC en un groupe prédéterminé de premières instructions de type CISC ; dans lequel
ledit code d'instructions, décodé par ledit décodeur de ROM d'émulation, est un code de secondes instructions de type CISC.

12. Système d'ordinateur comprenant :
un sous-système de mémoire pour stocker des données et des instructions ; et
un processeur couplé fonctionnellement pour accéder aux données et aux instructions stockées dans le sous-système de mémoire, dans lequel le processeur comprend un décodeur d'instruction (220) selon la revendication 10.

13. Décodeur destiné à un processeur, dans lequel le décodeur comprend un circuit d'émulation de décodeur d'instruction (231) selon la revendication 1.
